# FASCICULE DE BREVET EUROPEEN

(11) **EP 3 641 692 B1**
(45) Date de publication et mention de la délivrance du brevet: **06.09.2023**
(21) Numéro de dépôt: 18730016.5
(22) Date de dépôt: 18.06.2018
(51) Int. Cl.: A61C 8/00, A61C 9/00

(54) **ENSEMBLE DE RESTAURATION DENTAIRE**
ANORDNUNG ZUR ZAHNRESTAURATION
ASSEMBLY FOR DENTAL RESTORATION

(30) Priorité: 20.06.2017 FR 1755618; 27.10.2017 FR 1760122
(43) Date de publication de la demande: 29.04.2020
(73) Titulaire: Euroteknika, 74700 Sallanches (FR)
(72) Inventeur: CALVAT, Benjamin, 73400 Ugine (FR); CONSTANT, Loïs, 74170 Saint-Gervais les Bains (FR); PEYROT, Benjamin, 74310 Les Houches (FR); LEGER, Théo, 74700 Domancy (FR); LANCIEUX, Cédric, 74700 Cordon (FR)
(74) Mandataire: Novaimo
(86) Numéro de dépôt international: PCT/EP2018/066133
(87) Numéro de publication internationale: WO 2018/234247

(56) Documents cités:
- WO-A1-97/17907
- WO-A1-2008/120877
- WO-A1-2014/081843
- US-A- 5 810 592
- US-A1- 2013 196 290

## Description

La présente invention concerne un ensemble de restauration dentaire.

La restauration dentaire permet de réaliser une dentition artificielle à un patient partiellement ou totalement édenté. Elle repose sur l'intégration d'un ou plusieurs implants dans la structure osseuse, pratiquée par une incision de la gencive afin d'atteindre la structure osseuse et de la percer. Ensuite, un élément de cicatrisation est en général fixé sur un implant et cet ensemble reste intouché jusqu'à solidarisation de l'implant dans la structure osseuse par ostéointégration et cicatrisation de la gencive autour de l'élément de cicatrisation. La restauration dentaire peut être finalisée par la fixation d'un pilier de restauration sur l'implant, sur lequel est fixée la prothèse dentaire. Le pilier et la prothèse dentaire sont personnalisés, adaptés à l'anatomie du patient et à la dent à remplacer, pour atteindre un résultat aussi proche que possible de la dentition naturelle idéale. Pour cela, le volume précis de l'espace à restaurer est en général pris en compte, par une prise d'empreinte, qui permet la fabrication personnalisée de la prothèse dentaire.

Dans l'état de la technique, les méthodes existantes de restauration dentaire se heurtent à tout ou partie des problèmes techniques suivants :
- dans de nombreux procédés existants, une nouvelle intervention sur la gencive est réalisée après sa cicatrisation suite à la pause d'implant, pour réaliser l'empreinte, matérielle ou numérique, de l'espace à restaurer, tout en ayant une vue de l'implant et de la gencive pour prendre en compte précisément l'ensemble de cette géométrie, dans le but de fabriquer un pilier et une prothèse de formes précises : cette approche est naturellement traumatisante ;
- d'autres procédés existants limitent ce traumatisme en utilisant des composants de cicatrisation qui ne sont pas retirés lors d'une prise d'empreinte, pour ne pas heurter la gencive : en contrepartie, ces procédés utilisent des éléments cicatrisants particuliers, en général de forme sensiblement cylindrique et standard et intégrant parfois des indicateurs et/ou plusieurs composants complémentaires pour permettre la prise en compte de tout ou partie de la géométrie au-dessus de l'implant sans y avoir totalement accès par une prise d'empreinte. Ces méthodes moins traumatisantes présentent alors d'autres inconvénients, de complexité et/ou de moins bonne optimisation de la phase de cicatrisation.

Le document WO2014081843 décrit un ensemble de restauration dentaire qui peut être fixé sur un implant. Le document US5810592 décrit un ensemble de restauration dentaire dans lequel un élément de cicatrisation est destiné à coopérer avec un assemblage supportant une prothèse. Ces constructions présentent toutefois des inconvénients.

Ainsi, un objet général de l'invention consiste en une solution de restauration dentaire qui ne comprend pas tout ou partie des inconvénients de l'état de la technique.

Plus précisément, un premier objet de l'invention est une solution de restauration dentaire qui minimise le traumatisme du patient lors du procédé de restauration.

Un second objet de l'invention est une solution de restauration dentaire qui permet une restauration la plus adaptée possible à l'anatomie du patient.

Un troisième objet de l'invention est une solution de restauration dentaire la plus universelle possible, adaptée à tout implant et toute restauration. A cet effet, l'invention est précisément définie par les revendications.

D'autres avantages et caractéristiques de l'invention apparaîtront mieux à la lecture de la description de modes de réalisation préférés qui vont suivre, en référence aux figures, réalisés à titre d'exemples indicatifs et non limitatifs :
- les figures 1A, 1B et 1C représentent respectivement des vues en perspective d'un ensemble de restauration dentaire comprenant un élément de cicatrisation, un implant et un support amovible d'une prothèse pourvu d'une partie de réception d'une prothèse selon un premier mode de réalisation de l'invention ;
- les figures 1D et 1E représentent respectivement des vues en coupe longitudinale des ensembles de restauration dentaire représentés sur les figures 1A à 1C pourvus d'une première variante d'un élément de verrouillage, selon le premier mode de réalisation de l'invention ;
- la figure 1F représente une vue en perspective du support amovible d'une prothèse, selon le premier mode de réalisation ;
- la figure 1G représente une vue en coupe longitudinale du support amovible d'une prothèse, selon le premier mode de réalisation de l'invention ;
- la figure 1H représente une vue en perspective de la première variante de l'élément de verrouillage, selon le premier mode de réalisation
- les figures 1I et 1J représentent respectivement des vues en coupe longitudinale des ensembles de restauration dentaire représentés sur les figures 1A à 1C pourvus d'une deuxième variante de l'élément de verrouillage, selon le premier mode de réalisation de l'invention
- la figure 2A représente une vue en perspective d'un ensemble de restauration dentaire comprenant un élément de cicatrisation, un implant et un support amovible d'une prothèse pourvu d'une partie de réception d'une prothèse sommitale selon un deuxième mode de réalisation de l'invention ;
- la figure 2B représente une vue en coupe longitudinale de l'ensemble de restauration dentaire représenté sur la figure 2A selon le deuxième mode de réalisation de l'invention ;
- la figure 3A représente une vue en perspective d'un ensemble de restauration dentaire comprenant un élément de cicatrisation, un implant et un support amovible d'une prothèse pourvu d'une partie de réception d'une prothèse sommitale selon un troisième mode de réalisation de l'invention ;
- la figure 3B représente une vue en coupe longitudinale de l'ensemble de restauration dentaire représenté sur la figure 3A selon le troisième mode de réalisation de l'invention ;
- les figures 4A, 4B et 4C représentent respectivement des vues en perspective d'un ensemble de restauration dentaire comprenant un élément de cicatrisation, un implant et un support amovible d'une prothèse pourvu d'une partie de réception d'une prothèse sommitale selon un quatrième mode de réalisation de l'invention ;
- la figure 4D représente une vue en coupe longitudinale des ensembles de restauration dentaire représentés sur les figures 4A à 4C selon le quatrième mode de réalisation de l'invention ;
- les figures 5A, 5B et 5C représentent respectivement des vues en perspective d'un ensemble de restauration dentaire comprenant un élément de cicatrisation, un implant et un support amovible d'une prothèse pourvu d'une partie de réception d'une prothèse sommitale selon un cinquième mode de réalisation de l'invention ;
- la figure 5D représente une vue en coupe longitudinale des ensembles de restauration dentaire représentés sur les figures 5A à 5C selon le cinquième mode de réalisation de l'invention ;
- les figures 5E, 5F et 5G représentent respectivement des vues en perspective des ensembles de restauration dentaire représentés sur les figures 5A à 5C avec le support amovible d'une prothèse qui est désassemblé de l'élément de cicatrisation selon le cinquième mode de réalisation de l'invention ;
- la figure 5H représente une vue en coupe longitudinale des ensembles de restauration dentaire représentés sur les figures 5F à 5G selon le cinquième mode de réalisation de l'invention ;
- les figures 5i, 5J, 5K, 5L et 5M représentent respectivement des vues en perspective du support amovible d'une prothèse comprenant la partie de réception de la prothèse sommitale selon le cinquième mode de réalisation de l'invention ;
- la figure 6A représente une vue en perspective d'un ensemble de restauration dentaire comprenant un élément de cicatrisation, un implant et un support amovible d'une prothèse pourvu d'une partie de réception d'une prothèse sommitale ainsi qu'un élément de verrouillage selon un sixième mode de réalisation de l'invention ;
- la figure 6B représente une vue en coupe longitudinale de l'ensemble de restauration dentaire représenté sur la figure 6A selon le sixième mode de réalisation de l'invention ;
- la figure 6C représente une vue en perspective de l'ensemble de restauration dentaire représenté sur la figure 6A avec le support amovible d'une prothèse qui est désassemblé de l'élément de cicatrisation selon le sixième mode de réalisation de l'invention ;
- la figure 6D représente une vue en coupe longitudinale de l'ensemble de restauration dentaire représenté sur la figure 6C selon le sixième mode de réalisation de l'invention ;
- les figures 6E, 6F, 6G et 6H représentent respectivement des vues en perspective du support amovible d'une prothèse comprenant la partie de réception de la prothèse sommitale selon le sixième mode de réalisation de l'invention ;
- les figures 6I et 6J représentent une vue en perspective de l'ensemble de restauration dentaire des figures des 6A à 6D, comprenant l'élément de cicatrisation, l'implant et une variante du support amovible pourvu d'une partie de réception d'une prothèse sommitale ainsi qu'un élément de verrouillage selon un sixième mode de réalisation de l'invention;
- les figures 6k à 6M représentent chacune une vue en coupe longitudinale de l'ensemble de restauration dentaire représenté sur les figures 6I et 6J selon le sixième mode de réalisation de l'invention ;
- les figures 8 et 9 représentent respectivement des vues en perspective de dessous et de dessus d'un élément de cicatrisation selon l'un quelconque des premier au sixième modes de réalisation de l'invention ;
- les figures 10A à 10C et 11A à 11C représentent respectivement des vues en perspective de dessus et de dessous d'une série d'éléments de cicatrisation selon l'un quelconque des premier au sixième modes de réalisation de l'invention ;
- les figures 12A à 12C, 13A à 13C et 14A à 14C représentent respectivement des vues de côté, de dessus et de dessous d'une série d'éléments de cicatrisation selon l'un quelconque des premier au sixième modes de réalisation de l'invention ;
- la figure 15 illustre une vue en coupe d'un élément de cicatrisation disposé dans un implant selon l'un quelconque des premier au sixième modes de réalisation de l'invention ;
- la figure 16 illustre une vue de côté d'un élément de cicatrisation disposé dans un implant selon l'un quelconque des premier au sixième modes de réalisation de l'invention ;
- la figure 17 représente une vue en coupe d'un implant selon l'un quelconque des premier au sixième modes de réalisation de l'invention ;
- la figure 18 illustre une vue en coupe d'un élément de cicatrisation fixé sur un implant par une vis selon l'un quelconque des premier au sixième modes de réalisation de l'invention ;
- les figures 19 et 20 représentent respectivement une vue de côté et une vue en coupe d'une phase intermédiaire d'association d'un implant avec un élément de cicatrisation et avec une vis selon l'un quelconque des premier au sixième modes de réalisation de l'invention ;
- la figure 21 illustre une vue en coupe d'un ensemble de cicatrisation comprenant un élément de cicatrisation entouré de la gencive et fixé dans un implant selon l'un quelconque des premier au sixième modes de réalisation de l'invention ;
- les figures 22, 23 et 24 représentent deux vues schématiques d'une gencive en coupe au sein de laquelle est fixé un élément de cicatrisation selon l'un quelconque des premier au sixième modes de réalisation de l'invention ;
- la figure 25 représente les dents inférieures et supérieures en vue de dessus ;
- la figure 26 représente une vue des dents selon une section justa-gingivale ;
- la figure 27 représente une section horizontale de la dentition au niveau justa-gingival ainsi que les éléments de cicatrisation correspondants retenus selon l'un quelconque des premier au sixième modes de réalisation de l'invention ;
- les figures 28 à 30 représentent des vues en coupe par un plan médian vertical selon l'un quelconque des premier au sixième modes de réalisation de l'invention.

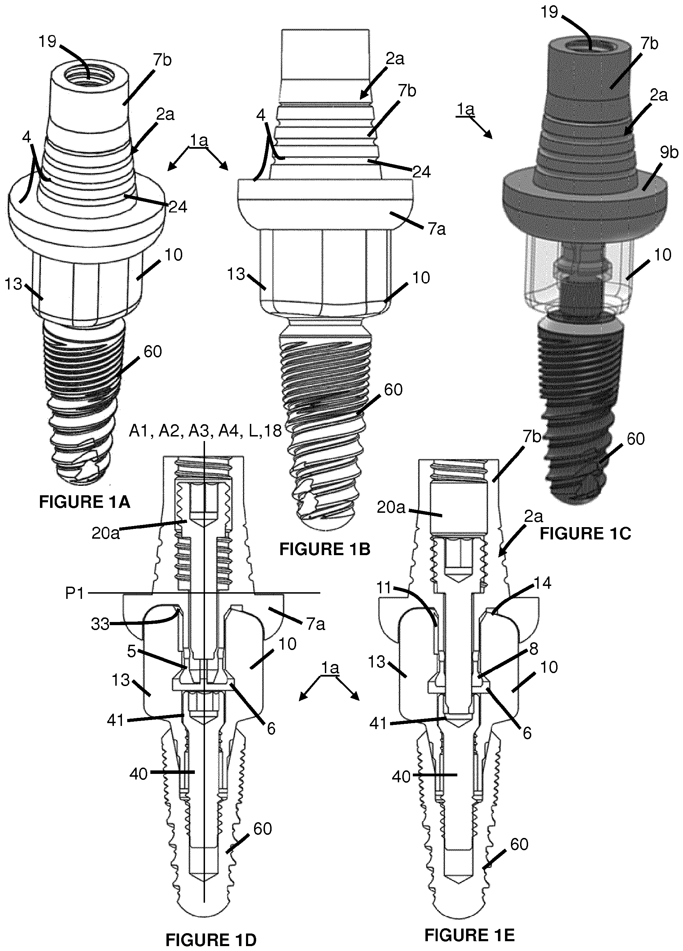

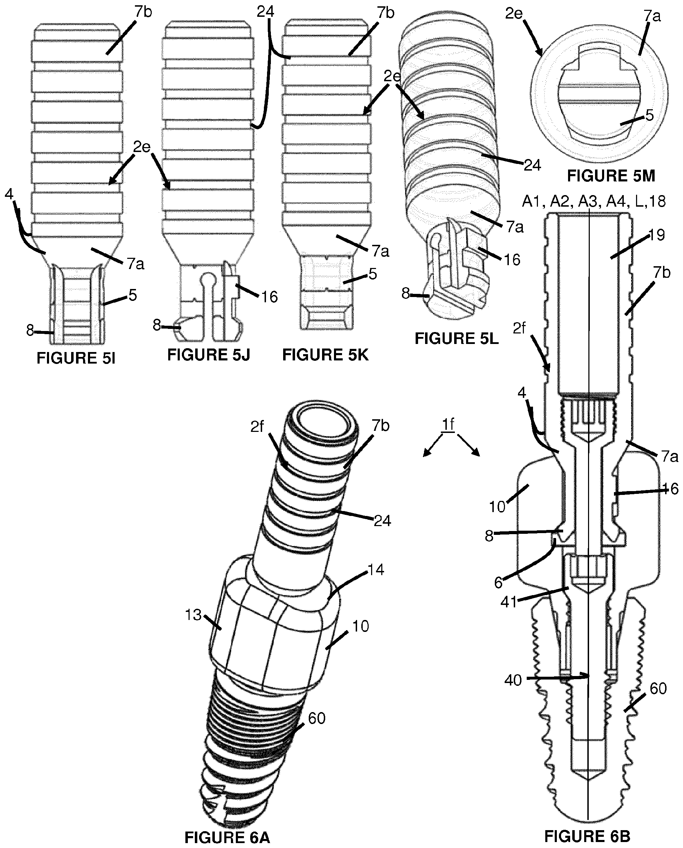

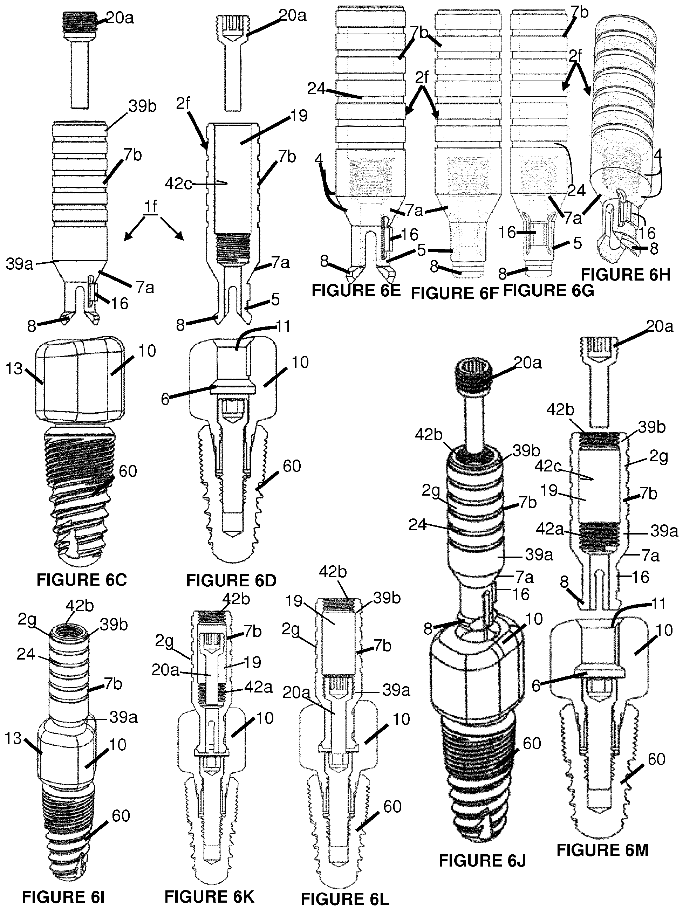

Dans les modes de réalisation représentés sur les figures 1A à 6H et 6J et 6k à 6M , l'ensemble de restauration dentaire 1a, 1b, 1c, 1d, 1e, 1f comprend un élément de cicatrisation, apte à une connexion avec un implant dentaire 60 (qui sera appelé plus simplement implant 60), et un support amovible d'une prothèse, notamment d'une prothèse sommitale 25, 25'. Un tel ensemble de restauration dentaire participe à la mise en oeuvre d'une deuxième phase d'un procédé de restauration dentaire qui peut comprend trois phases :
- une première phase dite de cicatrisation durant laquelle un ou plusieurs implant(s) sont intégrés dans la structure osseuse du patient par ostéointégration, et durant laquelle l'élément de cicatrisation particulier est utilisé, comme cela va être détaillé par la suite ;
- une deuxième phase de mise en place d'une prothèse sommitale 25 temporaire sur le ou les éléments de cicatrisation par l'intermédiaire du support amovible et ce notamment durant le temps nécessaire à la cicatrisation, et
- une troisième phase de restauration en tant que telle, durant laquelle une prothèse sommitale 25' définitive est mise en place sur le ou les implants par l'intermédiaire d'un pilier de restauration ou bien directement sur le ou les éléments de cicatrisation par l'intermédiaire du support amovible.

On notera que la deuxième phase peut être mise en oeuvre durant la première phase. Dans un cas particulier, la prothèse sommitale 25 dite temporaire peut avoir des caractéristiques adaptées à une utilisation définitive et dans ce cas la troisième phase est confondue avec la deuxième phase.

En remarque, il existe aussi de nombreuses situations pour lesquelles il est déconseillé de positionner une prothèse pendant la cicatrisation, soit pendant les deux premières phases susmentionnées. En effet, une telle prothèse apporte un avantage au niveau esthétique. Toutefois, elle présente un risque d'induire des efforts sur un implant en cours de cicatrisation, ce qui peut être néfaste. C'est pourquoi, l'élément de cicatrisation doit nécessairement être adapté pour une utilisation seul en bouche, soit pendant la première phase, soit pendant les deux premières phases, mais aussi être adapté pour les situations pour lesquelles l'ajout d'une prothèse est préférée, en première, deuxième ou troisième phase. Ainsi, l'élément de cicatrisation peut occuper une première configuration dans laquelle il reçoit la fixation amovible d'un support de prothèse, et une deuxième configuration dans laquelle il est fixé seul sur un implant, sans ajout d'une prothèse, ni d'aucun autre composant.

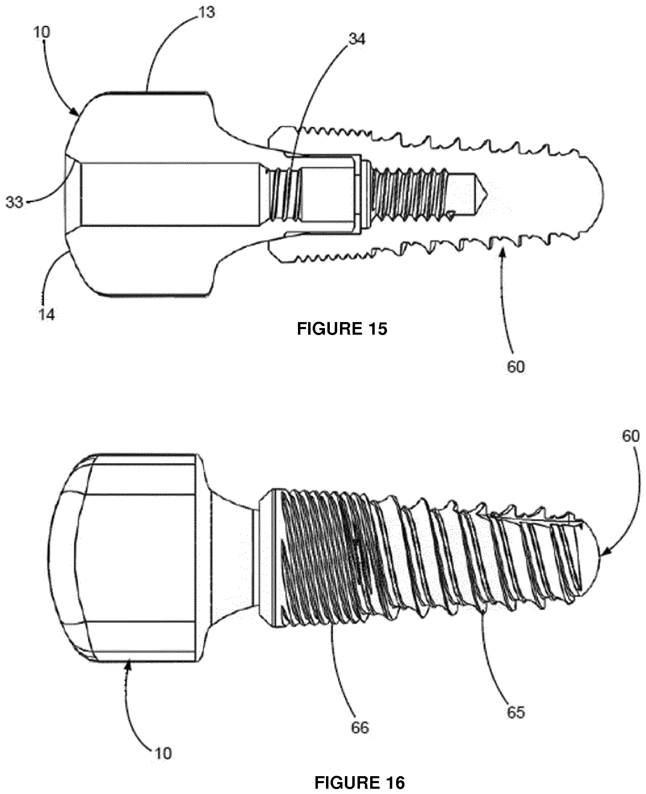

En référence aux figures 1A à 1E, 1I à 5H, 6A à 6D, 6I et 6J, et 6K à 6M et 15 à 21, l'implant 60 comprend une enveloppe globale de forme cylindrique ou tronconique et un axe longitudinal L formant un axe de révolution de cette enveloppe globale. L'implant 60 comprend un moyen d'ancrage dans la structure osseuse du patient. Ce moyen d'ancrage peut être un ensemble de filets disposés sur un pourtour extérieur de l'implant et comprenant un pas de filetage variable. Une partie inférieure de l'implant, c'est-à-dire une partie de l'implant au fond de la structure osseuse, peut comprendre des filets plus larges tandis qu'une partie supérieure de l'implant, c'est-à-dire une partie de l'implant du coté de la surface de la structure osseuse, peut comprendre des filets plus fins. L'implant comprend une ouverture du côté de son extrémité supérieure et suivant l'axe longitudinal L à l'intérieur de laquelle se trouve un dispositif de connexion avec un élément de cicatrisation 10. Le dispositif de connexion comprend une ouverture filetée 21, une ouverture de section hexagonale 22 dans le prolongement de l'ouverture filetée et une portée conique débouchant sur une face supérieure de l'implant. L'ouverture filetée 21, l'ouverture de section hexagonale 22 et la portée conique sont adjacentes, coaxiales à l'axe longitudinal L et agencées de sorte que l'ouverture filetée 21 est du coté inférieur de l'implant 60, la portée conique est du coté supérieur de l'implant 60 et l'ouverture de section hexagonale 22 est entre l'ouverture filetée 21 et la portée conique.

Dans cet ensemble, l'élément de cicatrisation 10 autrement appelé « capuchon » est une pièce monobloc, c'est-à-dire qu'il est constitué d'une seule pièce et de préférence à partir d'un unique matériau. Il a pour fonction de venir se loger au sein de la gencive incisée, après fixation de l'implant, par fixation directe ou indirecte, de préférence amovible, à l'implant.

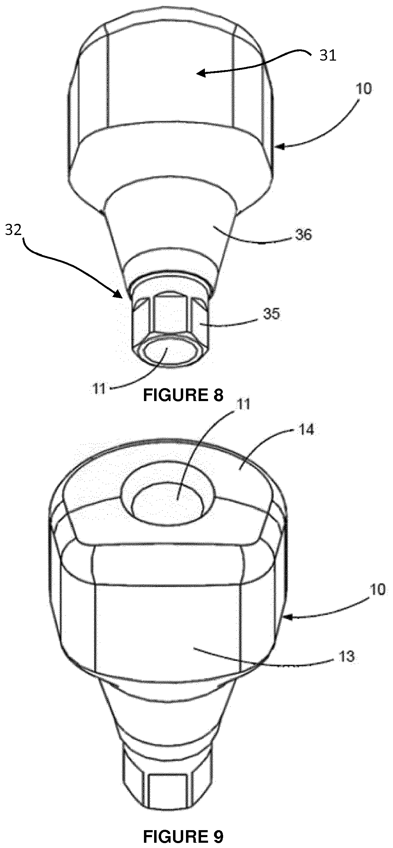

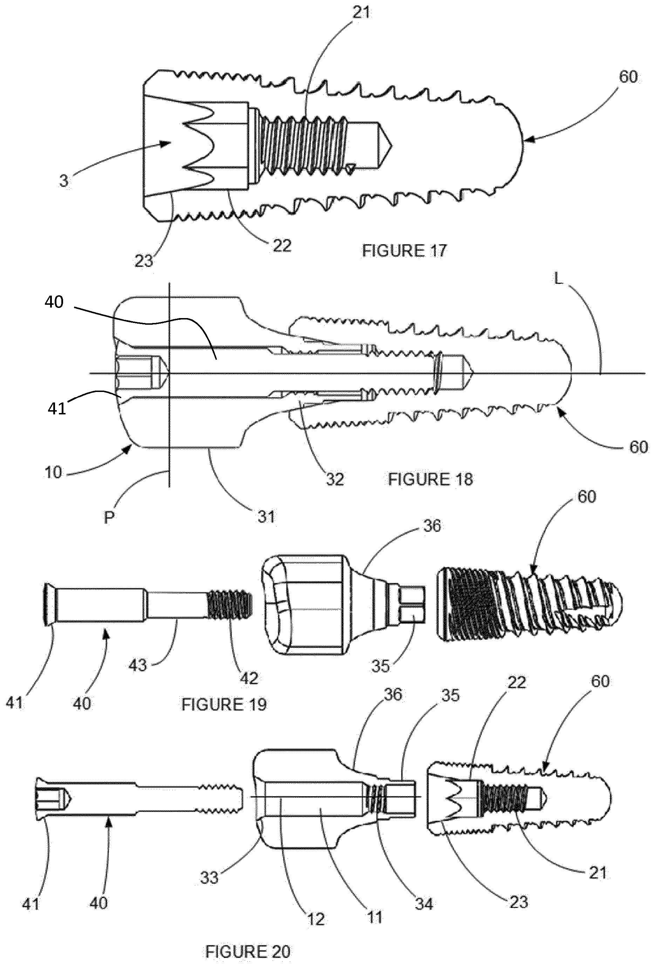

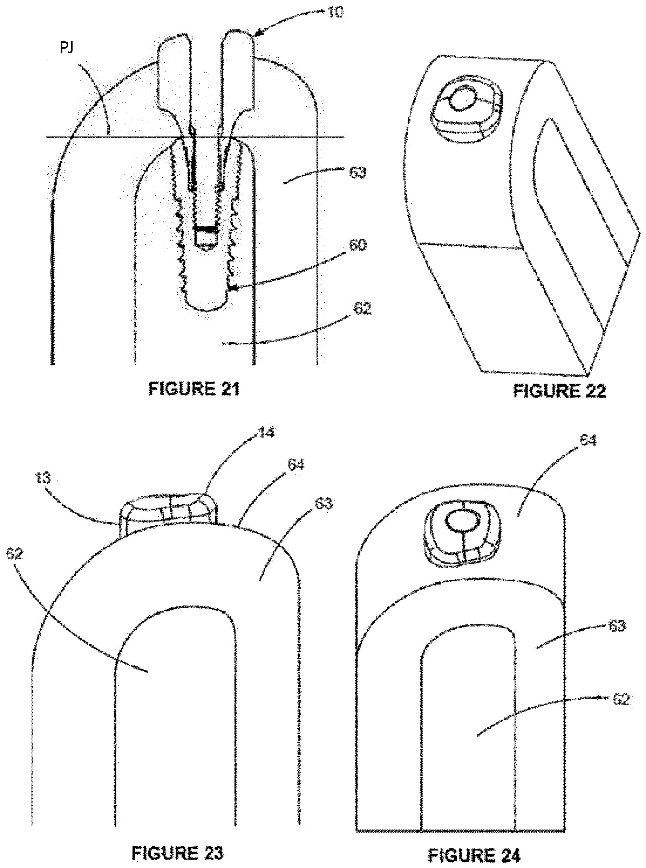

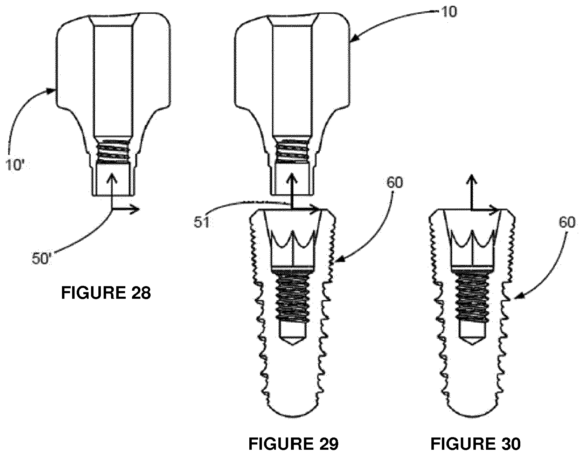

Comme illustré sur les figures 8 à 30, l'élément de cicatrisation 10 comprend une partie supérieure 31 destinée à être en contact avec la gencive et une partie inférieure 32 destinée à être introduite dans l'ouverture de l'implant pour coopérer avec le dispositif de connexion. L'élément de cicatrisation comprend une ouverture traversante 11 orientée selon un axe et destinée à recevoir une vis 40 vissée dans l'ouverture filetée 21 de l'implant. Autrement dit, l'élément de cicatrisation 10 comprend notamment une ouverture dans une surface opposée à une surface terminale 14, qui sera précisée par la suite. L'élément de cicatrisation 10 est donc destiné à être fixé directement sur l'implant par l'intermédiaire de la vis 40. Lorsque l'élément de cicatrisation est fixé sur l'implant, l'axe de l'ouverture traversante 11 est confondu avec l'axe longitudinal L de l'implant. Cet assemblage est notamment illustré par les figures 18 et 21. L'ouverture 11 traversante est de forme globalement cylindrique et comprend, à une extrémité du coté de la partie supérieure, une portée conique 33. Cette portée conique 33 est destinée à coopérer avec une portée conique d'une tête de vis 41 de forme complémentaire de manière à former une interface étanche. La portée conique 33 et la tête de vis 41 ont donc une fonction de cône d'étanchéité.

L'élément de cicatrisation 10 comprend au moins un filet 34 disposé au niveau de l'ouverture 11 et apte à coopérer avec une partie filetée de la vis 40 pour empêcher une dissociation entre la vis 40 et l'élément de cicatrisation 10 par un seul mouvement de translation. La vis 40 comprend une partie cylindrique non filetée entre la partie filetée et la tête de vis 41. La partie filetée est destinée à collaborer avec l'ouverture filetée 21 de l'implant pour bloquer en position l'élément de cicatrisation. La partie cylindrique de la vis est destinée à être positionnée le long de l'ouverture 11 de l'élément de cicatrisation. Lors de l'assemblage de la vis 40 avec l'élément de cicatrisation 10, la vis doit être vissée au travers de l'au moins un filet 34. La vis est conçue de sorte que, lorsque la tête de vis 41 est en appui sur la portée conique 33 de l'élément de cicatrisation, l'au moins un filet 34 est en vis-à-vis de la partie cylindrique de la vis. Avantageusement, la partie filetée de la vis 40 ne peut pas être simultanément en prise avec l'au moins un filet 34 et l'ouverture filetée 21 de l'implant. Un tel assemblage de la vis, également dénommé « imperdable » permet d'éviter de dissocier par erreur un élément de cicatrisation de la vis qui lui est associée, par exemple cet assemblage permet d'éviter de faire tomber la vis en manipulant l'élément de cicatrisation. L'élément de cicatrisation et la vis peuvent ainsi être livrés pré-assemblés ce qui réduit la quantité de manipulations pour le dentiste. En outre, l'au moins un filet 34 constitue également un point d'accroche de l'élément de cicatrisation qui pourra être utilisé lors d'un retrait ultérieur de l'élément de cicatrisation. En effet, le dentiste peut alors dévisser partiellement la vis de manière à dissocier sa partie filetée de l'ouverture filetée 21 de l'implant tout en conservant une prise de la partie filetée sur l'au moins un filet 34 de l'élément de cicatrisation. Le dentiste peut alors facilement saisir la tête de vis et tirer dessus pour démonter l'élément de cicatrisation sans transmettre d'effort à l'implant et sans gêne pour le patient.

Ainsi que nous l'avons évoqué précédemment, dans une alternative à la fixation directe de l'élément de cicatrisation 10 à l'implant 60 décrite auparavant, ce dernier peut être fixé de manière indirecte à cet implant 60. En effet, selon un procédé décrit dans le document FR3027792, cet élément de cicatrisation 10 peut être fixé de manière amovible à une embase de pilier qui est connectée à l'implant 60. Dans cette configuration, l'implant 60 est solidarisé à la partie osseuse, l'embase de pilier est fixée sur l'implant 60, de sorte que sa collerette se trouve positionnée au niveau de la frontière entre la partie osseuse et la gencive. L'élément de cicatrisation recouvre l'embase de pilier jusqu'à la collerette, de sorte que la gencive est presque exclusivement en contact avec l'élément de cicatrisation 10. L'ensemble formé par l'assemblage de l'élément de cicatrisation sur cette embase de pilier correspond ainsi à un ensemble de cicatrisation décrit précédemment. En remarque, dans tous les cas, le support amovible de réception d'une prothèse est distinct de l'ensemble de cicatrisation, c'est-à-dire des deux ou du seul composant qu'il contient. Notamment, le support amovible ne participe pas à une fonction de prise d'empreinte, numérique ou pas. C'est le seul ensemble de cicatrisation, après retrait ou en l'absence de support amovible de prothèse, qui est utilisé pour la prise d'empreinte, notamment la prise d'empreinte numérique par scanner.

Dans le mode de réalisation décrit précédemment dans lequel l'élément de cicatrisation 10 est monobloc, il comprend à son extrémité inférieure et sur un pourtour extérieur une portion de section hexagonale 35, apte à coopérer avec l'ouverture de section hexagonale 22 de l'implant. L'interface ainsi formée permet de garantir une fixation de l'élément de cicatrisation 10 à orientation unique, sans rotation de l'élément de cicatrisation autour de l'implant 60. La portion de section hexagonale 35 et l'ouverture de section hexagonale 22 sont des éléments anti-rotationnels qui pourraient être remplacés par tous autres éléments anti-rotationnels équivalents. En outre, l'élément de cicatrisation comprend également sur le pourtour extérieur de sa partie inférieure 32 une portion tronconique 36 ou sensiblement tronconique, apte à coopérer avec la portée conique 23 de l'implant pour former une interface étanche entre l'implant et l'élément de cicatrisation. La portion tronconique 36 comprend une frontière entre la partie inférieure 32 et la partie supérieure 31 de l'élément de cicatrisation. La portée conique 23 et la portion tronconique 36 ont une fonction de cône d'étanchéité et également une fonction de positionnement unique de l'élément de cicatrisation par rapport à l'implant. En effet l'assemblage de la portée conique 23 avec la portion tronconique 36 constitue une liaison pivot d'axe confondu avec l'axe longitudinal L. En particulier, après serrage de la vis 40, une telle liaison réduit à zéro tout jeu en translation entre l'élément de cicatrisation et l'implant selon l'axe longitudinal L ou tout axe perpendiculaire à l'axe longitudinal L. De plus, comme une rotation de l'élément de cicatrisation par rapport à l'implant est impossible grâce à l'interface constituée par la portion de section hexagonale 35 et l'ouverture de section hexagonale 22, la liaison entre l'élément de cicatrisation et l'implant est une liaison particulièrement rigide.

La partie supérieure de l'élément de cicatrisation comprend une face terminale 14 au travers de laquelle débouche la portée conique 33 de l'ouverture 11 et une surface latérale 13 autour de laquelle la gencive est destinée à se cicatriser. La portée conique est orientée vers l'intérieur de l'élément de cicatrisation de sorte que la tête de vis 41 est noyée dans l'élément de cicatrisation. Ainsi la tête de vis 41 ne dépasse pas de la face terminale 14. Ainsi, la tête de vis 41 est agencée de sorte à venir fermer l'ouverture 11 de la face terminale, tout en prolongeant sa surface pour en faire une surface finale continue, comme cela est particulièrement visible sur la figure 18.

Les implants existants peuvent avoir des formes différentes et notamment des dispositifs de connexion différents. Il peut exister autant d'éléments de cicatrisation différents que de dispositifs de connexion différents, afin de pouvoir disposer, pour chaque implant existant, d'un élément de cicatrisation doté d'un dispositif de connexion qui lui est adapté.

L'élément de cicatrisation 10 a pour fonction de venir se loger au sein de la gencive incisée, après fixation d'un implant. La configuration finale est représentée sur la figure 21. Dans cette configuration, l'implant 60 est solidarisé à la structure osseuse 62 et émerge faiblement de la partie osseuse dans la gencive 63. L'élément de cicatrisation 10 est fixé à l'implant 60 de sorte que la gencive est presque exclusivement en contact avec l'élément de cicatrisation 10. L'élément de cicatrisation participe, de préférence temporairement, à un procédé de restauration, permettant la cicatrisation et la fabrication sans heurt de la prothèse sommitale 25' définitive.

La gencive se cicatrise donc autour de la surface latérale 13 de l'élément de cicatrisation 10. Pour cela, cette surface latérale 13 est choisie pour correspondre au mieux au milieu buccal du patient. La surface terminale 14 de l'élément de cicatrisation est destinée à rester visible au-dessus de la surface gingivale 64 de la gencive, puisque la gencive 63 reste intégralement en contact avec la surface latérale 13 de l'élément de cicatrisation. En remarque, la partie haute de la surface latérale 13 et la surface terminale 14 forment donc une surface émergente de l'élément de cicatrisation. Cette surface émergente est notamment illustrée par les figures 22 à 24. Pour cela, des éléments de cicatrisation de hauteur différente peuvent être prévus pour s'adapter à différentes configurations de la géométrie buccale. A titre d'exemples de réalisation, trois hauteurs différentes standard permettent une bonne adaptation à toutes les situations. Cette hauteur est avantageusement comprise entre 3 et 10 mm. Une coloration de la vis peut permettre d'identifier rapidement la hauteur de l'élément de cicatrisation. Par exemple, une vis de couleur bleue peut être associée à l'élément de cicatrisation de petite taille. Une vis de couleur verte peut être associée à l'élément de cicatrisation de taille intermédiaire. Une vis de couleur rouge peut être associée à l'élément de cicatrisation de grande taille. Ainsi, le dialogue entre dentistes et prothésistes peut être simplifié.

Selon le mode de réalisation de l'invention, la forme de l'élément de cicatrisation est spécifiquement choisie pour favoriser la cicatrisation de la gencive, selon une forme anatomique correspondant au mieux à la dent à remplacer et par conséquent aussi à la future prothèse sommitale destinée à occuper cet espace buccal. Cette forme est notamment caractérisée par la section plane de sa surface latérale 13, cette section étant une section transverse par un plan perpendiculaire P à la surface latérale 13, représenté sur la figure 18, et sensiblement parallèle à la surface terminale 14. En remarque, cette section est sensiblement reproduite par la forme de la surface terminale 14, ou plus précisément par la projection de cette surface terminale 14 sur un tel plan perpendiculaire, c'est-à-dire sensiblement parallèle à la surface gingivale 64.

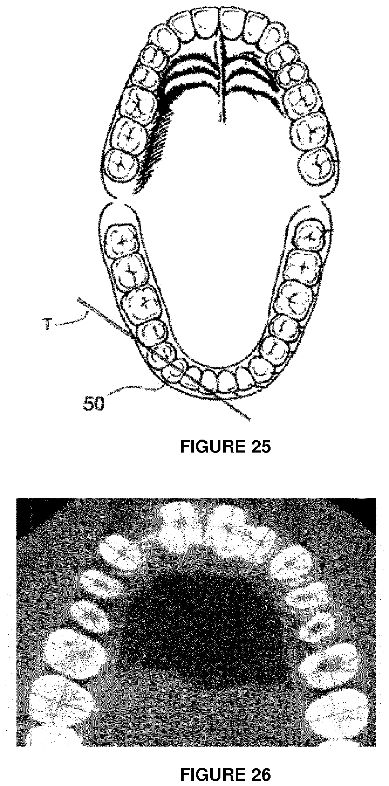

Pour comprendre l'approche retenue, la figure 25 illustre une vue de dessus des dents supérieures et inférieures et la figure 26 illustre une vue en coupe au niveau du plan justogingival PJ d'une dentition, représenté sur la figure 21, au niveau de la racine des émergences des dents. Ces figures montrent que les dents possèdent des sections de formes différentes, que l'on peut simplifier par des formes rectangulaires et/ou carrées et/ou triangulaires, mais plus précisément trapézoïdales.

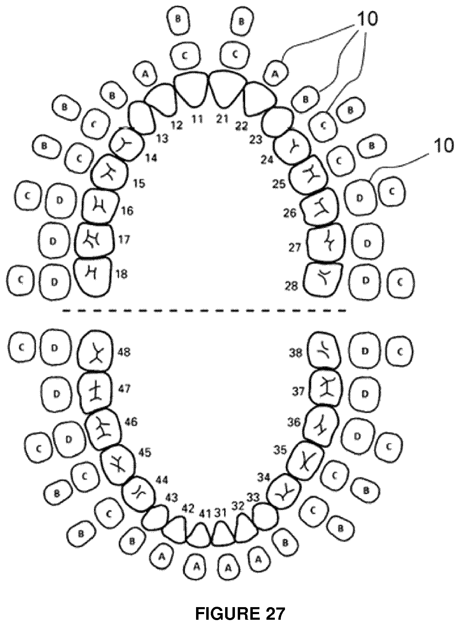

Selon le mode de réalisation choisi, une série d'éléments de cicatrisation 10 de formes différentes va permettre de reproduire au mieux ces différentes formes. La figure 27 représente ainsi une vue de dessus des sections de toutes les dents et une vue de dessus d'éléments de cicatrisation 10 associés à chaque dent. Les formes des différentes séries de dents, numérotées de 11 à 18, de 21 à 28, de 31 à 38 et de 41 à 48 sur cette figure, ces numéros ne devant pas être confondus avec les références numériques utilisées par ailleurs sur les autres figures pour désigner les caractéristiques de l'invention, sont toutes approchées par l'intermédiaire de quatre éléments de cicatrisation 10 différents, référencés A à D. Pour certaines dents, voire toutes les dents, plusieurs éléments de cicatrisation, parmi les éléments de cicatrisation A à D, apparaissent adaptés.

Dans l'exemple de réalisation choisi et illustré par la figure 27, les éléments de cicatrisation A sont adaptés pour traiter la restauration des incisives latérales supérieures et toutes les incisives inférieures. Les éléments de cicatrisation B sont adaptés pour la restauration des canines et des prémolaires, les éléments de cicatrisation C sont adaptés pour la restauration des molaires intermédiaires puis les éléments de cicatrisation D sont adaptés pour la restauration des molaires les plus grosses. En variante, la série d'éléments de cicatrisation 10 pourrait comprendre un tout autre nombre d'éléments de cicatrisation différents, par exemple trois ou cinq éléments de cicatrisation différents.

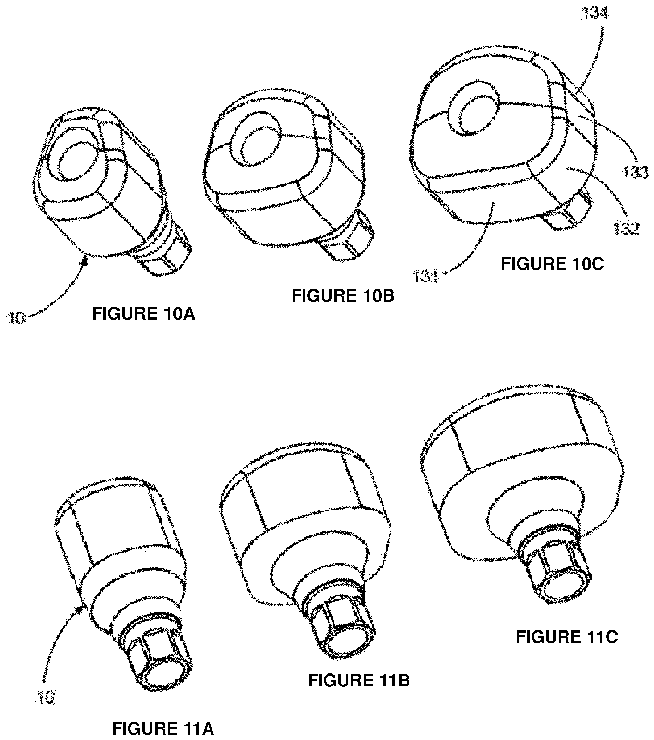

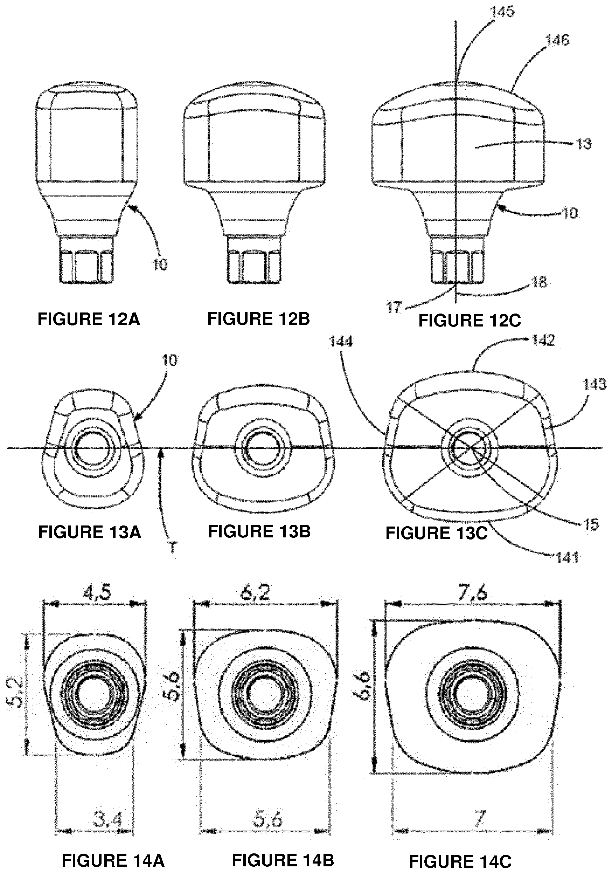

Ces éléments de cicatrisation vont maintenant être décrits plus en détail en considérant une série de trois éléments de cicatrisation A, B et C. L'élément de cicatrisation A est particulièrement illustré par les figures 10A à 14A, l'élément de cicatrisation B par les figures 10b à 14b et l'élément de cicatrisation C par les figures 10c à 14c. Pour ne pas alourdir les figures, les références numériques ne sont pas reproduites sur tous les éléments de cicatrisation de ces figures, toutefois, tous ces éléments de cicatrisation possèdent les mêmes caractéristiques, qui vont être décrites.

Comme cela ressort des figures 10A à 13C, les surfaces terminales 14 de ces éléments de cicatrisation 10 (A à C), destinées à un positionnement au-dessus de l'émergence gingivale, sont sensiblement planes et destinées à un positionnement parallèle à un plan horizontal (parallèle au plan justogingival PJ, entre 1 et 2 mm inclus au-dessus de ce plan) correspondant au plan de coupe de la figure 25. Elles sont toutefois légèrement bombées, présentant une partie centrale 145, plus particulièrement visible sur les figures 12A à 12C, destinées à s'élever plus au-delà de la gencive que ses parties périphériques 146.

La section transverse de l'élément de cicatrisation, par un plan P perpendiculaire à sa surface latérale 13, comme explicité précédemment, qui donne la forme finale à la gencive après cicatrisation, est sensiblement reproduite par la surface terminale 14 de l'élément de cicatrisation (notamment sa projection sur un plan P), qui vient dans son prolongement. Les sections de tous les éléments de cicatrisation présentent toutes une forme sensiblement trapézoïdale. Elles comprennent un grand côté 141, qui sera disposé du côté de l'extérieur de la bouche (côté vestibulaire), un petit côté 142 opposé parallèle, qui sera disposé du côté de l'intérieur de la bouche (côté lingual), reliés par deux côtés 143, 144. Le croisement des diagonales du trapèze permet de définir un centre 15. De préférence, ce centre 15 ainsi défini se trouve sur l'axe de l'ouverture traversante 11 de l'élément de cicatrisation. De plus, en considérant de même le centre 17 de l'ouverture 11 au niveau de l'extrémité inférieure de l'élément de cicatrisation dans l'alternative d'un ensemble de restaurant en plusieurs éléments distincts, sensiblement circulaire, il est possible de définir un axe 18 central de l'élément de cicatrisation, passant par les deux points centraux 15, 17. Cet axe 18 de l'élément de cicatrisation 10 est perpendiculaire à la surface terminale 14. De préférence, l'axe 18 de l'élément de cicatrisation, qu'il soit monobloc ou non, est confondu avec l'axe de l'ouverture traversante 11 et l'axe longitudinal L de l'implant.

Les trois types d'éléments de cicatrisation 10, A, B et C, diffèrent donc notamment par la forme trapézoïdale de la section transverse de leurs surfaces latérales 13. En fonction de l'élément de cicatrisation considéré, la forme trapézoïdale peut se rapprocher d'une forme triangulaire ou d'une forme rectangulaire, voire d'une forme carrée. A titre d'exemples de réalisation, les figures 14A à 14C donnent des ordres de grandeur des dimensions de ces éléments de cicatrisation, en millimètres. Naturellement, cette forme sensiblement trapézoïdale retenue présente des angles arrondis et des côtés courbés, pour garantir de ne pas heurter la gencive. De plus, la surface terminale 14 de chaque élément de cicatrisation présente, à l'exception de l'ouverture 11, une surface continue, sans reliefs, et/ou sans partie creuse, et/ou sans gorge, et/ou sans arrête, et/ou sans aspérité. Cette surface est convexe. Cette géométrie sans aspérité est favorable à l'hygiène buccale, réduit l'accumulation d'aliments et le dépôt de la plaque dentaire. En remarque, lorsque l'élément de cicatrisation est fixé seul sur un implant par l'intermédiaire d'une vis 40, la tête 41 de la vis complète la surface terminale 14, qui devient sensiblement continue, même au niveau de l'ouverture 11. Ainsi, cette surface fermée par la tête de vis présente alors sensiblement la propriété de surface continue, sans relief, et/ou sans partie creuse, et/ou sans gorge, et/ou sans arrête, et/ou sans aspérité. Cette architecture rend optimale l'utilisation d'un élément de cicatrisation seul. En complément, l'étanchéité est assurée au niveau de l'interface entre la tête 41 de vis 40 et la surface terminale 14.

En variante, la série d'éléments de cicatrisation pourrait comprendre un nombre différents de géométries différentes, par exemple au moins deux. Dans une variante de réalisation simplifiée, une seule forme d'élément de cicatrisation pourrait convenir pour toutes les dents.

Selon d'autres variantes de réalisation, la section transverse d'un élément de cicatrisation au niveau de sa surface latérale 13 pourrait s'approcher de tout polygone, comme un polygone à trois, cinq ou six côtés. En variante, les angles de ces polygones pourraient être si arrondis que la forme globale s'approcherait d'une forme oblongue, voire de section d'ovoïde, voire de toute autre forme plus éloignée d'un polygone. Avantageusement, cette forme comprend au moins un centre ou point parfaitement défini géométriquement pour définir un centre 15, voire un éventuel axe 18 de l'élément de cicatrisation. Cette section transverse est obtenue par un plan de coupe sensiblement parallèle au plan justogingival.

Selon le mode de réalisation, la géométrie de la surface émergente visible de l'élément de cicatrisation du côté de l'intérieur de la bouche diffère de la géométrie du côté de l'extérieur, pour tenir compte de la courbure de la gencive. Cette forme de la surface émergente de l'élément de cicatrisation est donc asymétrique par rapport à un plan médian contenant la tangente T à la gencive, représentée sur les figures 13A à 13C, et plus précisément sur la figure 25 en considérant une dent 50 à restaurer. Ce plan médian, dit plan tangent T, est parallèle à la tangente T à la gencive, perpendiculaire au plan justogingival PJ, passe au milieu 15 d'un élément de cicatrisation. Autrement dit, la géométrie de la surface émergente visible de l'élément de cicatrisation du côté de l'intérieur de la bouche diffère de la géométrie du côté de l'extérieur, pour tenir compte de la courbure de la gencive ou de la forme naturelle des dents. Notamment, la hauteur suivant l'axe longitudinal de l'élément de cicatrisation du côté lingual, c'est-à-dire du côté de l'intérieur de la bouche, peut être supérieure à la hauteur de l'élément de cicatrisation du côté de l'extérieur de la bouche. La forme de la surface émergente de l'élément de cicatrisation est donc asymétrique par rapport à un plan parallèle à l'axe longitudinal et passant par le centre 113 de la surface terminale 111. D'une part cette asymétrie peut être caractérisée par des formes différentes de l'élément de cicatrisation de part et d'autre dudit plan en considérant une projection de l'élément de cicatrisation sur un plan perpendiculaire à l'axe longitudinal. D'autre part, cette asymétrie peut être caractérisée par des hauteurs différentes de l'élément de cicatrisation de part et d'autre du plan. Un exemple d'une telle asymétrie est particulièrement visible sur la figure 21.

Ainsi, une forme circulaire pour la section d'un élément de cicatrisation, associée par exemple à un élément de cicatrisation cylindrique, est inadaptée. Plus généralement, toute courbe plane présentant une symétrie autour d'un point ou d'un axe est peu ou pas adaptée pour la section susmentionnée de l'élément de cicatrisation, car d'une part, elle ne serait pas adaptée à l'anatomie de la bouche et, d'autre part, son orientation circulaire autour de cet axe ne serait plus identifiable. Pour les mêmes raisons, la surface émergente et visible de l'élément de cicatrisation n'est donc pas symétrique par rapport à au moins un, ou même plusieurs plans parallèles à son axe 18, et/ou comprenant cet axe 18. Elle n'est pas symétrique par rapport à au moins un, ou plusieurs plans perpendiculaires à la surface émergente et passant par son centre 15 ou comprenant l'axe 18, que nous appelons plans médians perpendiculaires. Dans l'exemple représenté, seul le plan perpendiculaire au plan tangent T mentionné, passant au milieu des deux côtés 141, 142, forme un plan de symétrie. Les remarques précédentes s'appliquent à la surface émergente de l'élément de cicatrisation, ou à sa section transverse par un plan de coupe P défini précédemment, ou à la projection de sa surface émergente sur un tel plan P (parallèle au plan justogingival). Le plan médian perpendiculaire est alors tout plan perpendiculaire au plan P et passant au centre de la géométrie considérée de l'élément de cicatrisation. Alternativement, un plan médian perpendiculaire peut se définir comme tout plan contenant l'axe 18 de l'élément de cicatrisation. Cette surface émergente d'un élément de cicatrisation peut finalement prendre toute forme tridimensionnelle identifiable, permettant de reconnaître l'élément de cicatrisation utilisé et éventuellement de connaître son orientation, pour remplir une seconde fonction qui sera détaillée par la suite.

Les surfaces terminales 14 des éléments de cicatrisation sont prolongées à partir de leur périphérie 146 par la surface latérale 13 autour de laquelle se cicatrise la gencive, et qui donne ainsi la forme de gencive adaptée à la future prothèse sommitale. Cette surface latérale 13 présente plusieurs surfaces 131, 132, 133, 134, sensiblement planes, éventuellement légèrement courbées, s'étendant selon une direction sensiblement parallèle à l'axe 18 de l'élément de cicatrisation et/ou parallèlement à l'axe longitudinal L de l'implant, en prolongeant respectivement les différents côtés 141, 142, 143, 144 de la surface terminale 14 de l'élément de cicatrisation. Les interfaces entre la surface terminale 14 et ces différentes parties de la surface latérale 13 sont réalisées par des surfaces arrondis, sans aspérité, notamment convexes.

L'élément de cicatrisation peut se trouver en matériau plastique, compatible avec une utilisation médicale, et de couleur rose, blanche ou crème. En particulier l'élément de cicatrisation peut être fabriqué à partir d'un matériau polymère, notamment à partir d'un matériau « PEEK ». En variante, il peut être en métal, par exemple en titane, ou peut être en zircone. Effectivement, cet élément de cicatrisation 10 peut être en titane avec un traitement de surface réalisé à partir de nitrure de zircone afin notamment d'améliorer la visibilité de cet élément 10 par des scanners buccaux et ce, tout en étant biocompatible. L'élément de cicatrisation peut être fabriqué par usinage et/ou par moulage et/ou par addition de matière, autrement dit par impression 3D.

L'utilisation des éléments de cicatrisation permet donc de favoriser une cicatrisation idéale de la gencive dans le cadre d'un procédé de restauration dentaire du fait de sa géométrie conçue en phase avec l'anatomie buccale. En remarque, cet élément de cicatrisation peut en variante être totalement sous-gingival et invisible, puis rendu visible par intervention sur la gencive. Dans ce cas, la partie extrême de l'élément de cicatrisation sera toujours appelée abusivement partie émergente.

Par ailleurs, la surface émergente de l'élément de cicatrisation 10, formée par la surface terminale 14 et éventuellement la partie supérieure de la surface latérale 13, peut comprendre avantageusement au moins deux marqueurs informatifs permettant l'identification d'au moins deux caractéristiques de l'élément de cicatrisation 10 et/ou indirectement de l'embase de pilier et/ou de l'implant dentaire 60. L'aménagement de tels marqueurs informatifs sur l'élément de cicatrisation 10 permet de ne pas avoir recours à une technique de prise d'empreinte traditionnelle sur l'implant et de réduire le temps requis et la complexité pour mettre au point ensuite soit le pilier de restauration dentaire qui viendra se placer en remplacement de l'élément de cicatrisation 10 et sur lequel sera agencée la prothèse finale, soit la prothèse sommitale 25' définitive qui viendra se placer en remplacement de la prothèse sommitale 25 temporaire. En remarque, ces marqueurs sont optionnels, car selon une variante de réalisation, la seule forme de la surface émergente de l'élément de cicatrisation suffira à l'identification automatique des mêmes informations, du fait de la forme spécifique asymétrique de cette surface émergente. Il convient donc de bien différencier la solution avec un marqueur par rapport à la non utilisation de marqueur :
- un marqueur se définit comme un symbole ou une forme spécifique, dédiée à sa reconnaissance, qui a pour seule fonction cette reconnaissance ; le marqueur est généralement conçu spécifiquement pour être facilement reconnu par un scanner. Il a généralement aucun impact ou un impact négatif sur la fonction principale de cicatrisation de l'élément de cicatrisation ;
- l'alternative de l'invention consiste à ne pas utiliser de marqueur, mais à reconnaître la forme particulière de l'élément de cicatrisation, notamment sa partie terminale, pour en déduire une information recherchée. Dans ce cas, la forme reconnue a en premier lieu une fonction technique principale de cicatrisation anatomique. L'invention profite de ce caractère anatomique pour se passer de marqueur. La reconnaissance est plus difficile avec cette alternative, mais elle présente l'avantage de ne pas détériorer la forme idéale conçue pour la cicatrisation, dans le but secondaire de former un indicateur. La solution de cette alternative sans marqueur, ou avec moins de marqueur (par rapport à une solution uniquement basée sur des marqueurs), est donc avantageuse et préférée.

Selon un mode de réalisation, les caractéristiques identifiées par les marqueurs informatifs comprennent un ou plusieurs éléments parmi :
- la hauteur de l'élément de cicatrisation 10,
- la forme de l'élément de cicatrisation 10, notamment la forme et les dimensions de la section transverse de sa surface latérale 13 ou de la projection sur un plan parallèle de la surface émergente,
- les dimensions de la partie de liaison de l'élément de cicatrisation 10 avec ou sans embase de pilier, et donc de l'implant dentaire 60,
- l'orientation de l'implant dentaire 60, par l'intermédiaire de l'orientation du capuchon, par exemple par un marqueur aligné avec un élément anti-rotationnel du capuchon.

Selon un mode de réalisation particulier, lesdits au moins deux marqueurs informatifs comprennent un premier type de marquage informatif d'une première caractéristique de l'élément de cicatrisation 10 et un deuxième type de marquage informatif d'une deuxième caractéristique de l'élément de cicatrisation 10. Ces première et deuxième caractéristiques liées à l'élément de cicatrisation 10 sont en particulier la hauteur de l'élément de cicatrisation 10 et/ou la forme de l'élément de cicatrisation 10, notamment la forme et les dimensions de la section transverse de sa surface latérale 13 ou de la projection sur un plan parallèle de la surface émergente. Indirectement, un marqueur peut permettre d'en déduire une information sur l'embase de pilier quand il y en a un et éventuellement sur l'implant, comme leur orientation, qui peut être liée à l'orientation de l'élément de cicatrisation.

Sans que cela ne soit limitatif quant à la liberté de conception des marqueurs informatifs, chaque marqueur informatif appartient notamment à l'un des types suivants :
- un marqueur informatif négatif, notamment en creux dans l'une des surfaces de l'élément de cicatrisation 10, particulièrement sur sa surface émergente,
- un marqueur informatif positif, notamment en relief sur l'une des surfaces de l'élément de cicatrisation 10, particulièrement sur sa surface émergente,
- un marqueur informatif de forme particulière et identifiable formée dans l'une des surfaces de l'élément de cicatrisation 10, notamment de forme polygonale ou de ligne,
- un marqueur informatif constitué par une valeur numérique lisible ou par un code d'identification lisible tel qu'un code barres et/ou un code datamatrix. Ce marqueur peut être composé de chiffres et/ou de lettres et/ou de tout symbole et/ou de couleurs et/ou de marquages laser ;
- un moyen informatif constitué d'une puce RFID.

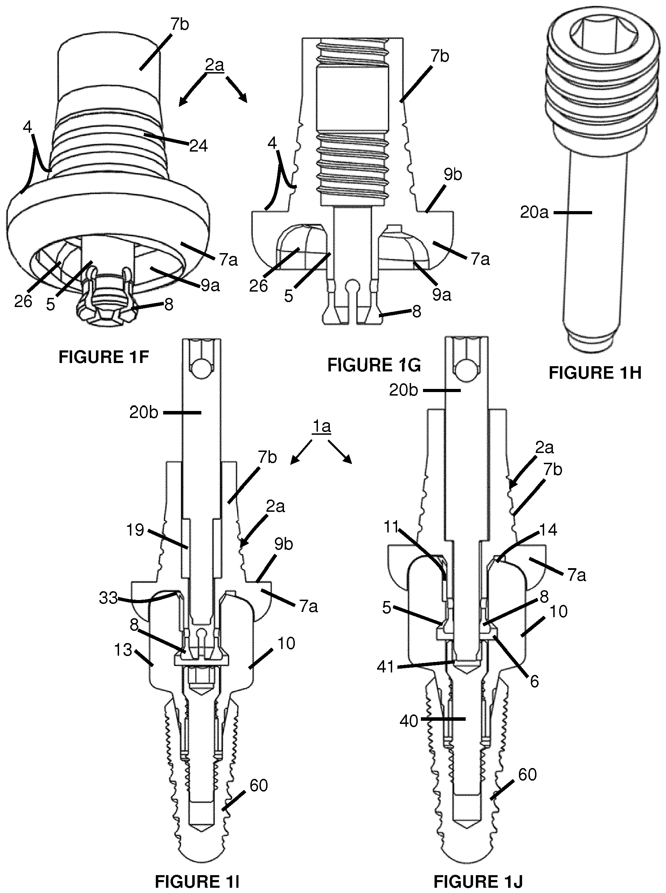

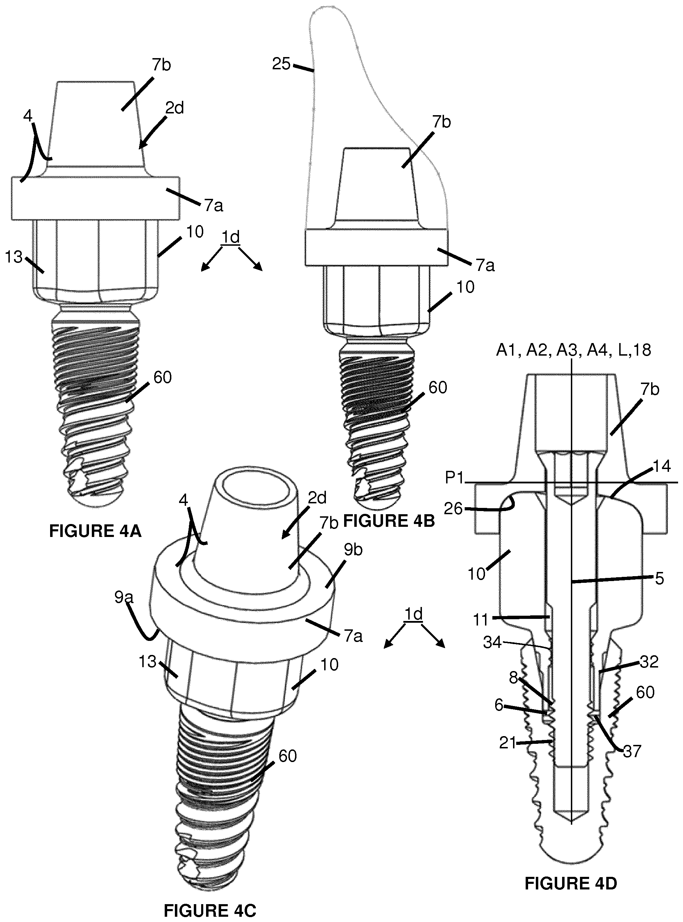

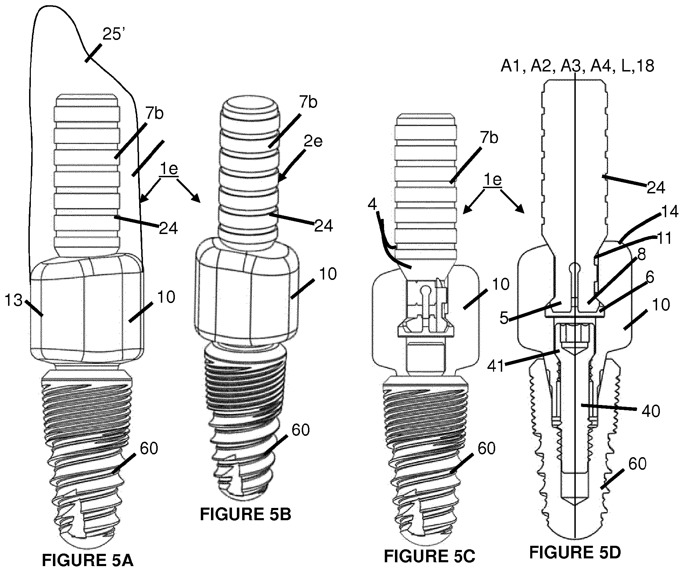

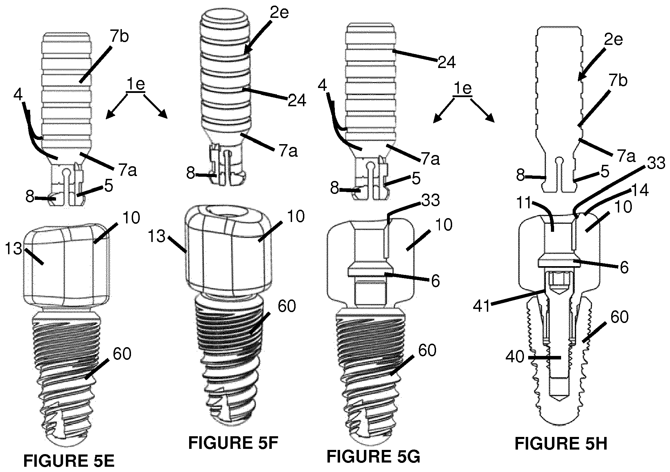

Ainsi que nous l'avons vu précédemment, cet ensemble de restauration dentaire 1a à 1f comprenant un élément de cicatrisation 10 apte à une connexion avec un implant dentaire 60, comporte le support amovible 2a à 2g d'une prothèse, que nous appellerons aussi parfois simplement « support ». Ce support amovible 2a à 2g comprend une partie de réception 4 d'une prothèse sommitale 25 temporaire (visible sur la figure 4B) et/ou d'une prothèse sommitale 25' définitive (visible sur la figure 5A). La partie de réception 4 est pourvue d'une première et d'une deuxième composantes 7a, 7b, et d'une partie de liaison 5, particulièrement visible sur les figures 1F et 1G.

Cette partie de liaison 5 est susceptible de coopérer avec une zone de liaison 6 correspondante définie dans l'ouverture traversante 11 ménagée dans l'élément de cicatrisation 10. Effectivement, une telle partie de liaison 5 qui permet de lier mécaniquement de manière amovible ce support 2a à 2g à l'élément de cicatrisation 10, comprend notamment au niveau d'une extrémité libre, un élément de fixation 8 tel qu'un premier organe de clippage notamment un organe mâle de clippage, ou une partie filetée. Dans ce contexte, lorsque la partie de liaison 5 comprend le premier organe de clippage, ce dernier est alors apte à coopérer avec une zone de liaison 6 telle qu'une gorge/rainure définie dans la paroi de l'ouverture traversante 11 de l'élément de cicatrisation 10 afin de réaliser cette liaison mécanique. On notera qu'une telle fixation par clippage permet de pouvoir monter et démonter facilement et plusieurs fois le support amovible 2a à 2g de l'ensemble de cicatrisation lors de la réalisation de la prothèse sommitale 25, 25' sur le support amovible 2a à 2g et ce, afin de pouvoir réaliser des opérations de polissage et/ou de retouche hors de la bouche du patient. On notera que, dans une variante où cet élément de fixation 8 de la partie de liaison 5 comprend une partie filetée, cette dernière est alors apte à coopérer avec une zone de liaison 6 telle qu'une partie taraudée définie dans la paroi de l'ouverture traversante 11 pour la réalisation de cette liaison mécanique.

Dans le premier mode de réalisation illustré sur les figures 1A à 1E et 1I, le support amovible 2a est une pièce monobloc pourvue d'un trou traversant 19 central globalement cylindrique s'étendant longitudinalement dans ce corps d'une extrémité à l'autre du support amovible 2a. La première composante 7a de la partie de réception 4 est pourvue de faces intérieure et extérieure 9a, 9b et d'une paroi périphérique essentiellement arrondie reliant ces faces 9a, 9b entre elles. Dans cette configuration, la deuxième composante 7b fait saillie au niveau d'une région centrale de la face extérieure 9b de la première composante en s'étendant longitudinalement selon un axe A3 qui est sensiblement perpendiculaire à un plan P1 comprenant cette face extérieure 9b. Cette deuxième composante a une forme essentiellement tronconique ou encore cylindrique et comporte une surface extérieure pourvue de plusieurs éléments de rétention 24 d'un élément de liaison de la prothèse sommitale 25, 25' sur la partie de réception 4 et donc sur cette surface. Lorsque cet élément de liaison est par exemple de la colle, chaque élément de rétention 24 peut être une cavité, une rainure, un trou ou encore une aspérité. On notera que chaque élément de rétention 24 peut également être un marqueur apportant une information sur une hauteur maximale de retouche de la prothèse sommitale et/ou du support. En complément, une partie du trou traversant 19 du support amovible 2a, définie au niveau de cette deuxième composante 7b, comprend une paroi qui est en tout ou partie taraudée.

Dans ce support amovible 2a, la partie de liaison 5 fait saillie dans une région centrale de la face intérieure 9a de la première composante 7a. Cette partie de liaison 5 est notamment prévue pour être insérée dans l'ouverture traversante 11 de l'élément de cicatrisation 10 lorsque le support amovible 2a est assemblé à cet élément de cicatrisation 10. Cette partie de liaison 5 comporte une portion tronconique ou sensiblement tronconique, apte à coopérer avec la portée conique 33 de l'élément de cicatrisation 10 pour former une interface étanche entre le support amovible 2a et l'élément de cicatrisation 10. Une telle partie de liaison 5 comprend au niveau de son extrémité libre l'élément de fixation 8 tel que le premier organe de clippage. Selon ce mode de réalisation, ce premier organe de clippage est compris à une extrémité du trou traversant 19 de ce support amovible 2a, et comporte plusieurs ailettes flexibles, ici deux, trois ou quatre, agencées autour de l'axe du trou traversant 19, jusqu'à son extrémité inférieure. Ces ailettes sont espacées les unes des autres d'un écart sensiblement similaire résultant d'un évidemment de matière. De telles ailettes sont susceptibles de passer d'une position de repos à une position de contrainte lorsqu'elles sont déplacées sensiblement radialement. Ces ailettes présentent chacune une forme qui est complémentaire à la zone de liaison 6 telle que la gorge avec laquelle elles sont susceptibles de coopérer afin de réaliser cette fixation par clippage.

Dans ce support amovible 2a, la face intérieure 9a de la première composante 7a est notamment prévue pour couvrir tout ou partie de la surface émergente de l'élément de cicatrisation 10 et notamment de préférence toute la surface terminale 14 et une partie de la surface latérale 13 jouxtant cette surface terminale 14, comme cela est visible sur les figures 1I et 1J. Ainsi, la face intérieure 9a comprend une cavité 26 définie autour de la partie de liaison 5 qui présente une forme complémentaire à celle de tout ou partie de la surface émergente avec laquelle elle est susceptible d'être en contact.

Dans ce premier mode de réalisation, l'ensemble de restauration dentaire 1a peut comprendre un élément de verrouillage 20a, 20b pour rigidifier le support amovible 2a, comprenant un corps pourvu de première et deuxième extrémités et ayant une forme globalement cylindrique. En référence à la figure 1H, cet élément de verrouillage 20a, 20b peut par exemple être une vis 20a, comprenant une tête et une tige. La tête est alors comprise dans la première extrémité supérieure du corps de cet élément de verrouillage 20a et comporte une partie filetée qui est apte à coopérer avec la partie de réception 4, en particulier avec une paroi intérieure du trou traversant 19 définie au niveau de la deuxième composante 7b qui est en tout ou partie taraudée. De manière alternative, en référence aux figures 1I et 1J, cet élément de verrouillage 20a, 20b peut être une tige 20b dont une partie du corps fait saillie du trou traversant 19 au niveau de la deuxième composante 7b de la partie de réception 4, lorsque cette tige est agencée dans l'ensemble de restauration dentaire 1a. Un tel élément de verrouillage 20a, 20b est prévu pour être inséré dans l'ensemble de restauration dentaire 1a en traversant le trou traversant 19 du support amovible 2a et en pénétrant dans l'ouverture traversante 11 de l'élément de cicatrisation 10, afin d'actionner les ailettes flexibles du premier organe de clippage pour qu'elles se déplacent ainsi de la position de repos vers la position de contrainte. En étant ainsi dans la position de contrainte, une plus grande partie de ces ailettes est alors agencée dans la gorge définie dans la paroi de l'ouverture traversante 11 et/ou l'échappement par rétractation de ces ailettes est impossible, ce qui remplit ainsi la fonction de verrouillage de l'assemblage du support amovible 2a avec l'élément de cicatrisation 10, voire avec l'ensemble de cicatrisation formé par l'implant 60 et l'élément de cicatrisation 10. Dans ce contexte seul le retrait de cet élément de verrouillage 20a, 20b du trou traversant 19 et de l'ouverture traversante 11 permet d'autoriser ainsi un désengagement des ailettes de ladite gorge. On notera que l'élément de verrouillage 20a, 20b est inséré dans le trou traversant 19 jusqu'à ce que sa deuxième extrémité qui traverse également l'ouverture traversante 11 de l'élément de cicatrisation 10 est agencée dans un logement défini dans la tête de vis 41 de la vis 40 reliant mécaniquement l'élément de cicatrisation 10 à l'implant 60. Ainsi lors d'un tel agencement de l'élément de verrouillage 20a, 20b dans l'ensemble de restauration dentaire 1a, le corps de cet élément de verrouillage 20a, 20b est alors compris entre les ailettes flexibles qui sont maintenues dans la position de fixation par clippage. On notera que lorsque cet élément de verrouillage 20a, 20b correspond à la vis 20a illustrée sur la figure 1H, sa première extrémité supérieure est comprise dans le trou traversant 19 et sa deuxième extrémité inférieure est localisée dans l'ouverture traversante 11 de l'élément de cicatrisation 10, en particulier dans le logement défini dans la tête de vis 41 de la vis 40 reliant mécaniquement l'élément de cicatrisation 10 à l'implant 60.

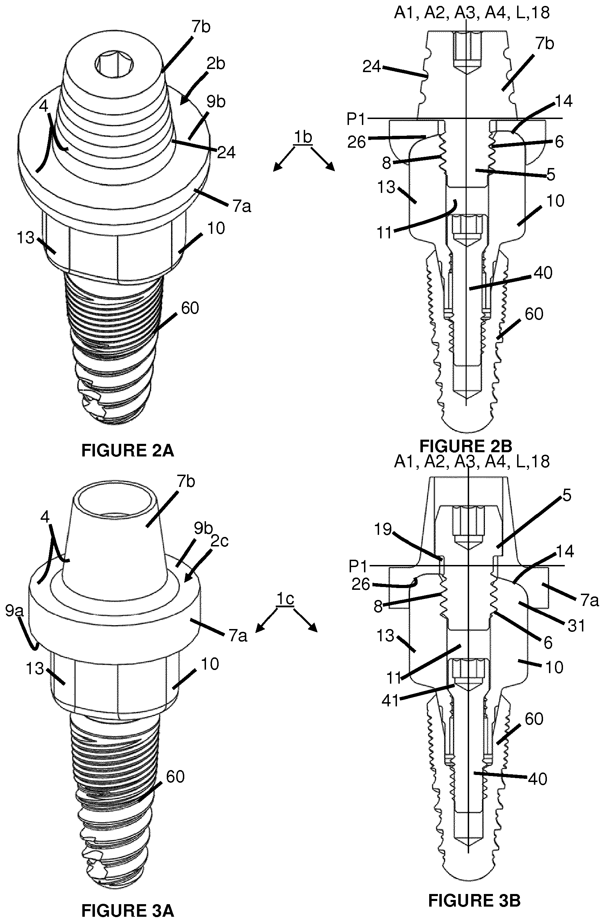

Dans le deuxième mode de réalisation illustré sur les figures 2A et 2B, le support amovible 2b, à la différence du support du premier mode de réalisation, qui est monobloc, comprend deux pièces distinctes. Dans cette configuration, la première pièce correspond à la première composante 7a de la partie de réception 4 qui est pourvue de faces intérieure et extérieure 9a, 9b et d'une paroi périphérique essentiellement arrondie reliant ces faces 9a, 9b entre elles. Elle comprend également une ouverture centrale dans laquelle est susceptible d'être insérée la deuxième pièce définissant la deuxième composante 7b et la partie de liaison 5 du support amovible 2b. Ainsi, lorsque les deux pièces sont assemblées ensemble pour former le support amovible 2b, en étant montées sur l'élément de cicatrisation 10, la deuxième composante 7b fait alors saillie au niveau d'une région centrale de la face extérieure 9b de la première composante 7a en s'étendant longitudinalement selon un axe A3 qui est sensiblement perpendiculaire à un plan P1 comprenant cette face extérieure 9b. Cette deuxième composante 7b a une forme essentiellement tronconique ou encore cylindrique et comporte une surface extérieure pourvue de plusieurs éléments de rétention 24 d'un élément de liaison de la prothèse sommitale sur la partie de réception 4 de manière similaire au premier mode de réalisation. On notera que chaque élément de rétention 24 peut également être un marqueur apportant une information sur une hauteur maximale de retouche de la prothèse sommitale et/ou du support.

En complément, la partie de liaison 5 fait saillie dans une région centrale de la face intérieure 9a de la première composante 7a. Cette partie de liaison 5 est notamment prévue pour être insérée dans l'ouverture traversante 11 de l'élément de cicatrisation 10 lorsque le support amovible 2b est assemblé à cet élément de cicatrisation 10. Une telle partie de liaison 5 comprend au niveau de son extrémité libre l'élément de fixation 8 ici une partie filetée. Cette partie filetée est apte à coopérer avec la partie taraudée définie dans la paroi de l'ouverture traversante 11 pour la réalisation de cette liaison mécanique entre support amovible 2b et l'élément de cicatrisation 10.

Dans ce support amovible 2b, la face intérieure 9a de la première composante 7a est notamment prévue pour couvrir tout ou partie de la surface émergente de l'élément de cicatrisation 10 et notamment de préférence toute la surface terminale 14 et une partie de la surface latérale 13 jouxtant cette surface terminale 14. Dans ce contexte, la face intérieure 9a comprend une cavité 26 définie autour de l'ouverture centrale et donc de la partie de liaison 5, qui présente une forme complémentaire à celle de tout ou partie de la surface émergente avec laquelle elle est susceptible d'être en contact.

On notera que l'extrémité de ce support amovible 2b comprend un logement défini au niveau de la deuxième composante 7b qui est apte à recevoir un outil adapté tel qu'un tournevis permettant d'assurer le vissage de la deuxième pièce définissant la deuxième composante 7b et la partie de liaison 5, dans l'ouverture traversante 11 de l'élément de cicatrisation 10 pour le montage de ce support amovible 2b avec l'élément de cicatrisation 10.

Dans les troisièmes et quatrième modes de réalisation illustrés respectivement sur les figures 3A et 3B, et 4A et 4D, le support amovible 2c, 2d, à la différence du support du premier mode de réalisation qui est monobloc, comprend deux pièces distinctes. Dans cette configuration, la première pièce correspond à la partie de réception 4 du support amovible 2c, 2d. Cette partie de réception 4 est pourvue d'un alésage central globalement cylindrique s'étendant longitudinalement dans ce corps d'une extrémité à l'autre de cette partie de réception 4. Cette partie de réception 4 comporte aussi les première et deuxième composantes 7a, 7b avec la première composante 7a qui est pourvue de faces intérieure et extérieure 9a, 9b et d'une paroi périphérique reliant ces faces entre elles. Dans cette configuration, la deuxième composante 7b fait saillie au niveau d'une région centrale de la face extérieure 9b de la première composante 7a en s'étendant longitudinalement selon un axe A3 qui est sensiblement perpendiculaire à un plan P1 comprenant cette face extérieure 9b. Cette deuxième composante 7b a une forme essentiellement tronconique ou encore cylindrique.

Dans ce support amovible 2c, 2d, la partie de liaison 5 est constituée par la deuxième pièce. Cette partie de liaison 5 est une vis pourvue d'une tête et d'une tige, qui est susceptible d'être insérée dans l'alésage ménagé dans la partie de réception 4 lors du montage du support amovible 2c, 2d sur l'élément de cicatrisation 10. Ainsi lorsque les deux pièces sont assemblées ensemble pour former le support amovible 2c, 2d, en étant montées sur l'élément de cicatrisation 10, la partie de liaison 5 fait saillie dans une région centrale de la face intérieure 9a de la première composante 7a. La tête de la vis formant cette partie de liaison 5 est alors agencée dans l'alésage et une extrémité de la tige dans l'ouverture traversante 11 de l'élément de cicatrisation 10. Autrement dit, cette partie de liaison 5 est notamment prévue pour être insérée dans l'ouverture traversante 11 de l'élément de cicatrisation 10 lorsque le support amovible 2c, 2d est assemblé à cet élément de cicatrisation 10. Une telle partie de liaison 5 comprend au niveau de son extrémité libre une partie filetée. Cette partie filetée est apte à coopérer avec la zone de liaison 6, ici la partie taraudée définie dans la paroi de l'ouverture traversante 11 pour la réalisation de cette liaison mécanique entre le support amovible 2c, 2d et l'élément de cicatrisation 10.

Dans le troisième mode de réalisation, cette partie taraudée est définie dans la paroi de l'ouverture traversante 11 comprise dans la partie supérieure 31 de l'élément de cicatrisation 10 alors que dans le quatrième mode de réalisation, cette partie taraudée est définie dans la paroi de l'ouverture traversante 11 comprise dans la partie inférieure 32 de l'élément de cicatrisation 10.

Dans le troisième mode de réalisation, l'alésage de la partie de réception 4 comprend une portée qui est destinée à coopérer avec une portée de la tête de vis de forme complémentaire de manière à former une interface étanche. La portée de l'alésage et la tête de vis ont donc une fonction d'étanchéité.

Dans le quatrième mode de réalisation la partie filetée de la partie de liaison 5 est simultanément en prise avec la partie taraudé 37 de la paroi de l'ouverture centrale et l'ouverture filetée 21 de l'implant 60. Dans cette configuration, l'élément de cicatrisation 10 est pris en sandwich entre le support amovible 2c, 2d et l'implant 60. Ainsi, à la différence des autres modes de réalisation, dans ce quatrième mode de réalisation, l'ensemble de restauration dentaire 1d comprend une seule vis formée par la partie de liaison 5, permettant de relier entre eux le support amovible 2d, l'élément de cicatrisation 10 et l'implant 60. En complément, l'alésage de la partie de réception 4 comprend une portée conique qui est destinée à coopérer avec une portée conique de la tête de vis de forme complémentaire de manière à former une interface étanche. La portée conique et la tête de vis ont donc une fonction de cône d'étanchéité. Dans cette configuration, cette vis formée par la partie de liaison 5 est conçue de sorte que, lorsque la tête de vis 41 est en appui sur la portée conique de l'alésage, l'au moins un filet 34 de la paroi de l'ouverture traversante 11 comprise dans la partie inférieure 32 de l'élément de cicatrisation 10 est en vis-à-vis avec la vis. Avantageusement, la partie filetée de cette vis ne peut pas être simultanément en prise avec l'au moins un filet 34 et l'ouverture filetée 21 de l'implant 60. Un tel assemblage de la vis, également dénommé « imperdable » permet d'éviter de dissocier par erreur un élément de cicatrisation 10 de la vis, ici la partie de liaison 5, qui lui est associée, par exemple cet assemblage permet d'éviter de faire tomber la vis en manipulant l'élément de cicatrisation 10.

Dans ce support amovible 2c, 2d de ces deux modes de réalisation, la face intérieure 9a de la première composante 7a est notamment prévue pour couvrir tout ou partie de la surface émergente de l'élément de cicatrisation 10 et notamment de préférence toute la surface terminale 14 et une partie de la surface latérale 13 jouxtant cette surface terminale 14. Dans ce contexte, la face intérieure 9a comprend une cavité 26 définie autour de l'alésage et donc de la partie de liaison 5, qui présente une forme complémentaire à celle de tout ou partie de la surface émergente avec laquelle elle est susceptible d'être en contact.

Dans ces deux modes de réalisation, cette deuxième composante 7b a une forme essentiellement cylindrique et comporte une surface extérieure qui peut être pourvue ou dépourvue de plusieurs éléments de rétention d'un élément de liaison d'une prothèse sommitale sur la partie de réception 4, de manière similaire au premier mode de réalisation.

On notera que la tête de la vis formant la partie de liaison 5 comprend un logement qui apte à recevoir un outil adapté tel qu'un tournevis permettant d'assurer le vissage de cette partie de liaison 5 dans l'ouverture traversante 11 de l'élément de cicatrisation 10 pour le montage de ce support amovible 2c, 2d avec l'élément de cicatrisation 10.

Dans le cinquième mode de réalisation illustré sur les figures 5A à 5M, le support amovible 2e est une pièce monobloc. Dans ce support amovible 2e, la première composante 7a de la partie de réception 4 relie la deuxième composante 7b à la partie de liaison 5. Dans cette configuration, la deuxième composante 7b s'étend longitudinalement selon un axe A3. Cette deuxième composante 7b a une forme essentiellement cylindrique et comporte une surface extérieure pourvue de plusieurs éléments de rétention 24 d'un élément de liaison de la prothèse sommitale sur la partie de réception 4 de manière similaire au premier mode de réalisation. On notera que chaque élément de rétention 24 peut également être un marqueur apportant une information sur une hauteur maximale de retouche de la prothèse sommitale et/ou du support.

Dans ce support amovible 2e, la première composante 7a est pourvue d'une portion tronconique coopérant avec la portée conique 33 de l'élément de cicatrisation 10 pour rendre étanche une interface entre l'élément de cicatrisation 10 et le support amovible 2e et pour réduire à zéro tout jeu en translation entre l'élément de cicatrisation 10 et le support amovible 2e.

La partie de liaison 5 de ce support amovible 2e est notamment prévue pour être insérée dans l'ouverture traversante 11 de l'élément de cicatrisation 10 lorsque le support amovible 2e est assemblé à cet élément de cicatrisation 10. Cette partie de liaison 5 comporte de plus l'élément de fixation 8, formé par le premier organe de clippage comprenant deux ailettes flexibles selon ce mode de réalisation. Ces deux ailettes sont espacées l'une de l'autre d'un écart résultant d'un évidemment de matière. De telles ailettes sont susceptibles de passer élastiquement d'une position de repos à une position de contrainte lorsqu'elles sont déplacées sensiblement radialement. Ces ailettes présentent chacune une forme qui est complémentaire à la zone de liaison 6 avec laquelle elles sont susceptibles de coopérer afin de réaliser une fixation par clippage.

Cette partie de liaison 5 comprend de plus un élément anti-rotationnel 16 pour une bonne tenue du support amovible 2e dans l'élément de cicatrisation 10. Cet élément anti-rotationnel 16 est défini sur une partie d'une paroi périphérique de cette partie de liaison 5 qui est en regard avec la paroi de l'ouverture traversante 11 de l'élément de cicatrisation 10 au-dessus de la zone de liaison 6 comprenant le deuxième élément de clippage, lorsque le support amovible 2e est assemblé à l'élément de cicatrisation 10.

Dans le sixième mode de réalisation illustré sur les figures 6A à 6M, le support amovible 2f, 2g est sensiblement similaire à celui du cinquième mode de réalisation. La seule différence entre ces deux modes de réalisation est liée à la présence d'un trou traversant 19 dans le support amovible 2f, 2g de ce sixième mode de réalisation. En effet dans ce mode de réalisation, le support amovible 2f, 2g est une pièce monobloc pourvue de ce trou traversant 19 central globalement cylindrique s'étendant longitudinalement dans le corps d'une extrémité à l'autre du support amovible 2f, 2g. Une partie de ce trou traversant 19 du support amovible 2f, 2g définie au niveau de la deuxième composante 7b comprend une paroi qui est en tout ou partie taraudée. Dans cette configuration, le premier organe de clippage est compris à une extrémité de ce trou traversant 19 de ce support amovible 2f, 2g en comportant plusieurs ailettes flexibles, ici deux, définissant donc cette extrémité du trou traversant 19.

Dans ce sixième mode de réalisation, l'ensemble de restauration dentaire 1f peut comprendre un élément de verrouillage 20a pour rigidifier le support amovible 2f, 2g, comprenant un corps pourvu de première et deuxième extrémités et ayant une forme globalement cylindrique. Cet élément de verrouillage 20a peut par exemple être une vis comprenant une tête et une tige qui est sensiblement similaire à l'élément de verrouillage 20a illustré sur les figures 1H, 6C, 6D et 6K à 6M. La tête de cet élément de verrouillage 20a est alors comprise dans la première extrémité du corps de cet élément de verrouillage 20a et comporte une partie filetée qui est apte à coopérer avec la partie de réception 4 en particulier avec une paroi du trou traversant 19 définie au niveau de cette deuxième composante 7b qui est en tout ou partie taraudée. En effet, cette paroi du trou traversant 19 peut comprendre au moins un filet 42a, 42b, plus précisément dans une première variante de l'élément de support 2f cette paroi comprend un seul filet 42a défini dans une partie inférieure 39a de la deuxième composante 7b, et dans une deuxième variante de ce support 2g, la paroi comprend deux filets 42a, 42b agencés respectivement dans la partie inférieure 39a et dans une partie supérieure 39b de cette deuxième composante 7b. Dans ces deux variantes du support amovible 2f, 2g, la partie restante 42c de cette paroi du trou traversant 19, n'est pas taraudée. Un tel élément de verrouillage 20a est prévu pour être inséré dans l'ensemble de restauration dentaire 1f en traversant le trou 19 du support amovible 2f, 2g et l'ouverture traversante 11 de l'élément de cicatrisation 10 afin d'actionner les ailettes flexibles du premier organe de clippage pour qu'elles se déplacent ainsi de la position de repos vers la position de contrainte. En étant ainsi dans la position de contrainte, une plus grande partie de ces ailettes est alors agencée dans la gorge définie dans la paroi de l'ouverture traversante 11 entraînant un verrouillage de l'assemblage du support amovible 2f, 2g avec l'élément de cicatrisation 10, voire avec l'ensemble de cicatrisation formé par l'implant 60 et l'élément de cicatrisation 10. Dans ce contexte, seul le retrait de cet élément de verrouillage 20a du trou traversant 19 et de l'ouverture traversante 11 permet d'autoriser ainsi un désengagement partiel des ailettes de ladite gorge. On notera que l'élément de verrouillage 20a est inséré dans le trou traversant 19 jusqu'à ce que sa deuxième extrémité qui traverse également l'ouverture traversante 11 de l'élément de cicatrisation 10 est agencée dans un logement défini dans la tête de vis 41 de la vis 40 reliant mécaniquement l'élément de cicatrisation 10 à l'implant 60. Ainsi lors d'un tel agencement de l'élément de verrouillage 20a dans l'ensemble de restauration dentaire 1f, le corps de cet élément de verrouillage 20a est alors compris entre les ailettes flexibles qui sont maintenues dans la position de contrainte. On notera que lorsque cet élément de verrouillage 20a correspond à la vis illustrée sur les figures 1H, 6C, 6D, 6K à 6M, sa première extrémité est comprise dans le trou traversant 19 et sa deuxième extrémité est localisée dans l'ouverture traversante 11 de l'élément de cicatrisation 10, en particulier dans le logement défini dans la tête de vis 41 de la vis 40 reliant mécaniquement l'élément de cicatrisation 10 à l'implant 60. On notera que, le trou traversant 19 comprend une portée conique qui est destinée à coopérer avec une portée conique de la tête de vis de forme complémentaire de manière à former une interface étanche. La portée conique et la tête de vis ont donc une fonction de cône d'étanchéité.

En référence à la figure 6K, on notera qu'un agencement de la tête de vis de la vis formant cet élément de verrouillage 20a, au niveau de la partie non-taraudée 42c de la paroi du trou traversant 19 de la deuxième variante du support amovible 2g correspond à un assemblage de la vis dénommé « imperdable » qui permet d'éviter de dissocier par erreur le support amovible 2g de la vis qui lui est associée, par exemple cet assemblage permet d'éviter de faire tomber la vis en manipulant ce support amovible 2g.

En complément, le support amovible 2a à 2g de ces modes de réalisation comprend l'axe longitudinal A1 qui s'étend sur toute sa longueur et qui est confondu avec des axes de révolution A2, A3, A4 des première et deuxième composantes 7a, 7b de la partie de réception 4 et de la partie de liaison 5. Cet axe A1 du support amovible 2a à 2g est également confondu avec l'axe L de l'implant 60 et l'axe 18 de l'élément de cicatrisation 10.

Dans ces modes de réalisation, le support amovible 2a à 2g peut être fabriqué en matériau plastique, compatible avec une utilisation médicale. En particulier, ce support 2a à 2g peut être fabriqué à partir d'un matériau polymère, notamment à partir d'un matériau tel que le « PEEK », le « PMMA » ou encore le « POM » pour faciliter les retouches et le collage de la prothèse sommitale 25, 25' sur la partie de réception 4. En variante, il peut être en métal, par exemple en titane, ou peut être en zircone ou en céramique. Le support amovible 2a à 2g peut être fabriqué par usinage et/ou par moulage et/ou par addition de matière, autrement dit par impression 3D.

De même, l'élément de verrouillage 20a, 20b peut être également fabriqué en matériau polymère comme le matériau « PEEK » ou encore en métal par exemple en titane.

Ainsi, l'invention offre la possibilité de réaliser une prothèse sommitale temporaire dans une cavité buccale d'un patient le temps de la réalisation d'une restauration dentaire comprenant un implant et notamment le temps de la cicatrisation lié à la mise en oeuvre d'une telle restauration et ce, à partir du support 2a à 2g qui peut être monté de manière amovible sur l'élément de cicatrisation à partir d'un mécanisme de fixation par vissage ou clippage assez simple à mettre en oeuvre, permettant de faciliter toutes les opérations relatives à la réalisation de prothèses sommitales temporaires et/ou définitives. En effet, le support 2a à 2g peut être facilement enlevé de la cavité buccale du patient afin que des opérations de retouche ou encore de polissage de la prothèse sommitale et/ou de ce support 2a à 2g puissent être réalisées ou encore pour que d'autres opérations relatives à la réalisation de prothèses sommitales définitives comme la prise d'empreinte puissent être effectuées. En remarque, ce caractère amovible permet le seul retrait du support, l'élément de cicatrisation restant bien en bouche, fixé sur un implant. La liaison entre le support et l'élément de cicatrisation peut être différente. Toutefois, l'élément de cicatrisation comprend de préférence une partie de liaison femelle (notamment au sein de son ouverture 11), et le support une partie de liaison mâle correspondante. En effet, une partie de liaison mâle sur l'élément de cicatrisation formerait une surface terminale peu adaptée pour rester seule en bouche. En remarque complémentaire, il apparait naturellement dans tous ces modes de réalisation que le support est distinct de l'élément de cicatrisation. De plus, il est apte à une fixation directe sur cet élément de cicatrisation.

En complément, un tel support 2a à 2g, ainsi qu'une prothèse sommitale 25, 25' supportée, en étant agencé dans une mâchoire d'un patient, contribue à maintenir les dents adjacentes en position en agissant comme un étai entre ces dents, afin d'éviter qu'elles ne convergent, particulièrement durant la phase d'ostéointégration de l'implant. En remarque, dans le cas de fixation du support par un élément de verrouillage 20a comme une vis, la prothèse 25, 25' présente avantageusement une ouverture pour l'accès à cet élément de verrouillage.

Avantageusement un tel support amovible 2a à 2g permet d'éviter tout endommagement de la surface émergente de l'élément de cicatrisation et ce, tout en permettant la réalisation d'une prothèse sommitale. C'est particulièrement avantageux en ce que cela autorise la mise en oeuvre de la dernière phase de restauration dentaire comprenant une étape d'identification automatique de la géométrie des pièces de restauration à former par l'intermédiaire de la forme de la surface émergente de l'élément de cicatrisation, dont le caractère asymétrique permet d'en déduire automatiquement des informations sur son positionnement et indirectement sur le positionnement et l'orientation de l'implant.

D'autre part, le support amovible 2a à 2g permet de préserver l'attache épithéliale des tissus mous à la partie transmuqueuse de l'élément de cicatrisation 10 qui serait sinon endommagée par d'autres méthodes mises en oeuvre dans l'état de la technique pour la réalisation d'une telle prothèse sommitale dans le cadre de restauration dentaire mettant en oeuvre un implant.

En remarque, l'ensemble formé par un élément de cicatrisation 10, un support et une prothèse sommitale fixée sur ce support peut aussi être avantageusement utilisé pour la fixation d'une prothèse définitive. L'invention ne se limite pas aux modes de réalisation décrits, et comprend par exemple des combinaisons de composants des modes de réalisation décrits précédemment.

L'invention porte aussi sur un système de restauration, qui met en oeuvre le procédé de restauration mentionné précédemment. Ce système comprend un ensemble de restauration dentaire tel que décrit précédemment, un élément de prise d'empreinte, notamment la prise d'empreinte numérique par scanner, et au moins un calculateur qui exploite les images provenant de la prise d'empreinte pour une reconnaissance automatique, sur la base de la forme anatomique de l'ensemble de cicatrisation ou en variante par la reconnaissance de marqueurs, du type d'élément de cicatrisation et indirectement de l'espace cicatrisé et du positionnement de l'implant. En remarque, ce système utilise l'ensemble de restauration dans une deuxième configuration dans laquelle une éventuelle prothèse montée sur un support amovible est retirée : l'espace buccal avec le seul ensemble de cicatrisation est numérisé.

## Revendications

1. Ensemble de restauration dentaire (1a, 1b, 1c, 1d, 1e, 1f) comprenant un élément de cicatrisation (10) apte à une connexion avec un implant dentaire (60), comportant une surface latérale (13) destinée à une intégration au sein d'une gencive pour mettre en forme la gencive lors de sa cicatrisation, et une surface terminale (14) formant avec une partie de ladite surface latérale (13) une surface émergente, destinée à rester hors de la gencive, qui est asymétrique par rapport à au moins un plan médian perpendiculaire, et l'élément de cicatrisation (10) comprenant une ouverture traversante (11) et une zone de liaison (6) définie dans cette ouverture traversante, ledit ensemble de restauration dentaire (1a, 1b, 1c, 1d, 1e, 1f) comprenant un support amovible (2a, 2b, 2c, 2d, 2e, 2f, 2g) d'une prothèse comprenant une partie de réception (4) d'une prothèse sommitale (25, 25') et une partie de liaison (5) susceptible de coopérer avec ladite zone de liaison (6) complémentaire définie dans ladite ouverture traversante (11) ménagée dans ledit élément de cicatrisation (10), ladite zone de liaison (6) étant ainsi apte à recevoir la fixation amovible du support amovible (2a, 2b, 2c, 2d, 2e, 2f, 2g) d'une prothèse dans une première configuration de l'ensemble de restauration dentaire, et ledit ensemble de restauration dentaire (1a, 1b, 1c, 1d, 1e, 1f) comprenant une vis (40) comprenant une tête (41), qui vient se noyer dans l'élément de cicatrisation et ne dépasse pas de la face terminale (14) de l'élément de cicatrisation (10) dans une deuxième configuration dans laquelle l'élément de cicatrisation est fixé seul à un implant par ladite vis (40), sans support amovible (2a, 2b, 2c, 2d, 2e, 2f, 2g) d'une prothèse, de sorte que la surface terminale (14) et/ou la surface émergente de l'élément de cicatrisation (10) complétée par la tête (41) de vis (40) dans cette deuxième configuration forme une surface fermée présentant une surface continue sans aspérité.

2. Ensemble (1a, 1b, 1c, 1d, 1e, 1f) selon la revendication précédente, **caractérisé en ce que** des parties de la surface émergente de l'élément de cicatrisation (10) destinées respectivement à un positionnement orienté vers l'intérieur et vers l'extérieur de la bouche présentent une forme différente.

3. Ensemble (1a, 1b, 1c, 1d, 1e, 1f) selon l'une quelconque des revendications précédentes, **caractérisé en ce qu'**une section transverse de la surface latérale (13) de l'élément de cicatrisation (10) ou une projection sur un plan parallèle de la surface émergente de l'élément de cicatrisation (10) présente :
- une forme sensiblement trapézoïdale ou une forme sensiblement polygonale, ou triangulaire, ou carrée, ou rectangulaire, ou ovoïde, ou une forme sensiblement polygonale avec des angles arrondis ; et/ou
- une partie destinée à un positionnement orienté vers l'extérieur de la bouche de plus grande dimension qu'une partie destinée à un positionnement orienté vers l'intérieur.

4. Ensemble (1a, 1b, 1c, 1d, 1e, 1f) selon l'une des revendications précédentes, **caractérisé en ce que** la surface terminale (14) et/ou la surface émergente de l'élément de cicatrisation (10) présente :
- une surface non plane, courbée ; et/ou
- une surface convexe.

5. Ensemble (1a, 1b, 1c, 1d, 1e, 1f) selon l'une quelconque des revendications précédentes, **caractérisé en ce que** la surface émergente de l'élément de cicatrisation présente une forme tridimensionnelle identifiable, permettant automatiquement sa reconnaissance, son positionnement, et/ou son orientation et indirectement le positionnement et l'orientation de l'implant, sans marqueur.

6. Ensemble (1a, 1b, 1c, 1d, 1e, 1f) selon l'une quelconque des revendications précédentes, **caractérisé en ce que** la partie de liaison (5) du support amovible comprend au niveau d'une extrémité libre un élément de fixation (8), tel qu'un premier organe de clippage ou une partie filetée, qui est susceptible de coopérer avec ladite zone de liaison (6) de l'élément de cicatrisation (10) afin de réaliser une liaison mécanique.

7. Ensemble (1a, 1b, 1c, 1d, 1e, 1f) selon l'une quelconque des revendications précédentes, **caractérisé en ce que** la zone de liaison (6) de l'élément de cicatrisation (10) comprend :
- un deuxième organe de clippage, notamment une gorge, définie dans une paroi de l'ouverture traversante (11), qui est prévu pour coopérer avec un premier organe de clippage, ou
- une partie taraudée définie dans une paroi de l'ouverture traversante (11) prévue pour coopérer avec une partie filetée de l'élément de fixation (8) de la partie de liaison (5).

8. Ensemble (1a, 1b, 1c, 1d) selon l'une quelconque des revendications précédentes, **caractérisé en ce que** la partie de réception (4) du support amovible (2a, 2b, 2c, 2d) comprend une première composante (7a) pourvue d'une face intérieure (9a) susceptible de couvrir tout ou partie de la surface émergente de l'élément de cicatrisation (10) et une deuxième composante (7b) faisant saillie d'une face extérieure (9b) de la première composante (7a).

9. Ensemble (1e, 1f) selon l'une quelconque des revendications précédentes, **caractérisé en ce que** la partie de réception (4) du support amovible (2e, 2f, 2g) comprend une première composante (7a) reliant une deuxième composante (7b) de cette partie de réception (4) avec la partie de liaison (5).

10. Ensemble (1e, 1f) selon la revendication précédente, **caractérisé en ce que** la première composante (7a) est pourvue d'une portion tronconique coopérant avec une portée conique de l'élément de cicatrisation (10) pour rendre étanche une interface entre l'élément de cicatrisation et le support amovible (2e, 2f, 2g) et pour réduire à zéro tout jeu en translation entre l'élément de cicatrisation et le support amovible (2e, 2f, 2g).

11. Ensemble (1e, 1f) selon l'une quelconque des revendications 1 à 10, et 13 et 14, **caractérisé en ce que** la partie de liaison (5) est pourvue d'un élément anti-rotationnel (16) pour une bonne tenue du support amovible (2e, 2f, 2g) sur l'élément de cicatrisation (10).

12. Ensemble (1a, 1f) selon l'une quelconque des revendications précédentes, **caractérisé en ce que** le support amovible (2a, 2f, 2g) comprend un trou traversant (19) s'étendant longitudinalement d'une extrémité à l'autre du support amovible (2a, 2f, 2g).

13. Ensemble (1a, 1f) selon l'une quelconque revendication précédente, **caractérisé en ce qu'**il comprend un élément de verrouillage (20a, 20b) dont une première extrémité comprend une partie filetée qui est apte à coopérer avec la partie de réception (4) du support amovible (2a, 2f, 2g), notamment avec une paroi d'un trou traversant (19) définie au niveau d'une deuxième composante (7b) de la partie de réception (4) qui est en tout ou partie taraudée, et/ou **en ce qu'**il comprend un élément de verrouillage (20a, 20b) dont une deuxième extrémité est apte à coopérer avec la partie de liaison (5) du support amovible (2a, 2f, 2g), notamment avec un premier organe de clippage.

14. Ensemble (1a, 1b, 1c, 1d, 1e, 1f) selon l'une quelconque des revendications précédentes, **caractérisé en ce que** le support amovible (2a, 2b, 2c, 2d, 2e, 2f, 2g) est fabriqué à partir d'un matériau polymère, notamment à partir d'un matériau « PEEK », « PMMA » ou encore « POM », et/ou **en ce que** le support amovible est une pièce monobloc (2a, 2b, 2e, 2f, 2g) et/ou **en ce que** l'élément de cicatrisation (10) est une pièce monobloc.

15. Système de restauration dentaire, **caractérisé en ce qu'**il comprend un ensemble de restauration dentaire selon l'une des revendications précédentes, un élément de prise d'empreinte numérique, notamment un scanner, et au moins un calculateur qui exploite les images provenant de la prise d'empreinte numérique pour une reconnaissance automatique, sur la base de la forme anatomique de l'ensemble de cicatrisation et/ou par la reconnaissance d'au moins un marqueur, du type d'élément de cicatrisation utilisé, ce système utilisant l'ensemble de restauration dans sa deuxième configuration dans laquelle seul l'ensemble de cicatrisation est numérisé dans l'espace buccal.

## Patentansprüche

1. Zahnrestaurationseinheit (1a, 1b, 1c, 1d, 1e, 1f), umfassend ein Einheilelement (10), das für eine Verbindung mit einem Zahnimplantat (60) geeignet ist, mit einer Seitenfläche (13), die für eine Integration in ein Zahnfleisch bestimmt ist, um das Zahnfleisch während seiner Heilung zu formen, und einer Endfläche (14), die mit einem Teil der Seitenfläche (13) eine hervorstehende Fläche bildet, die dazu bestimmt ist, außerhalb des Zahnfleischs zu verbleiben, und die in Bezug auf mindestens eine senkrechte Mittelebene asymmetrisch ist, wobei das Einheilelement (10) eine Durchgangsöffnung (11) und einen in dieser Durchgangsöffnung definierten Verbindungsbereich (6) umfasst, **dadurch gekennzeichnet, dass** die Zahnrestaurationseinheit (1a, 1b, 1c, 1d, 1e, 1f) einen abnehmbaren Prothesenträger (2a, 2b, 2c, 2d, 2e, 2f, 2g) umfasst, der einen Teil (4) zur Aufnahme einer Sommitalprothese (25, 25') und einen Verbindungsteil (5) umfasst, der mit dem komplementären Verbindungsbereich (6), der in der im Einheilelement (10) vorgesehenen Durchgangsöffnung (11) definiert ist, zusammenwirken kann, wobei der Verbindungsbereich (6) somit dazu geeignet ist, in einer ersten Konfiguration der Zahnrestaurationseinheit die abnehmbare Befestigung des abnehmbaren Prothesenträgers (2a, 2b, 2c, 2d, 2e, 2f, 2g) aufzunehmen, und wobei die Zahnrestaurationseinheit (1a, 1b, 1c, 1d, 1e, 1f) eine Schraube (40) umfasst, die einen Kopf (41) umfasst, der in einer zweiten Konfiguration, in der das Einheilelement allein durch die Schraube (40) ohne abnehmbaren Prothesenträger (2a, 2b, 2c, 2d, 2e, 2f, 2g) an einem Implantat befestigt ist, in das Einheilelement eintaucht und nicht über die Endfläche (14) des Einheilelements (10) hinausragt, sodass die Endfläche (14) und/oder die hervorstehende Fläche des Einheilelements (10), die durch den Kopf (41) der Schraube (40) ergänzt wird, in dieser zweiten Konfiguration eine geschlossene Fläche bildet, die eine durchgehende Oberfläche ohne Unebenheiten aufweist.

2. Einheit (1a, 1b, 1c, 1d, 1e, 1f) nach dem vorangehenden Anspruch, **dadurch gekennzeichnet, dass** die Teile der hervorstehenden Fläche des Einheilelements (10), die für eine im Mund nach innen bzw. nach außen gerichtete Positionierung bestimmt sind, eine unterschiedliche Form aufweisen.

3. Einheit (1a, 1b, 1c, 1d, 1e, 1f) nach einem der vorangehenden Ansprüche, **dadurch gekennzeichnet, dass** ein Querschnitt der Seitenfläche (13) des Einheilelements (10) oder eine Projektion der hervorstehenden Fläche des Einheilelement (10) auf eine Parallelebene Folgendes aufweist:
- eine im Wesentlichen trapezförmige Form oder eine im Wesentlichen polygonale oder dreieckige oder quadratische oder rechteckige oder eiförmige Form oder eine im Wesentlichen polygonale Form mit abgerundeten Ecken und/oder
- einen für eine im Mund nach außen gerichtete Positionierung bestimmten Teil, der größer ist als ein für eine nach innen gerichtete Positionierung bestimmter Teil.

4. Einheit (1a, 1b, 1c, 1d, 1e, 1f) nach einem der vorangehenden Ansprüche, **dadurch gekennzeichnet, dass** die Endfläche (14) und/oder die hervorstehende Fläche des Einheilelements (10) Folgendes aufweist:
- eine nichtebene, gekrümmte Oberfläche und/oder
- eine konvexe Oberfläche.

5. Einheit (1a, 1b, 1c, 1d, 1e, 1f) nach einem der vorangehenden Ansprüche, **dadurch gekennzeichnet, dass** die hervorstehende Fläche des Einheilelements eine identifizierbare dreidimensionale Form aufweist, die automatisch seine Wiederkennung, seine Positionierung und/oder seine Ausrichtung und indirekt die Positionierung und die Ausrichtung des Implantats ohne Marker ermöglicht.

6. Einheit (1a, 1b, 1c, 1d, 1e, 1f) nach einem der vorangehenden Ansprüche, **dadurch gekennzeichnet, dass** der Verbindungsteil (5) des abnehmbaren Trägers an seinem freien Ende ein Befestigungselement (8), wie ein erstes Cliporgan oder ein Außengewindeteil, umfasst, das mit dem Verbindungsbereich (6) des Einheilelements (10) zusammenwirken kann, um eine mechanische Verbindung herzustellen.

7. Einheit (1a, 1b, 1c, 1d, 1e, 1f) nach einem der vorangehenden Ansprüche, **dadurch gekennzeichnet, dass** der Verbindungsbereich (6) des Einheilelements (10) Folgendes umfasst:
- ein zweites Cliporgan, insbesondere eine in einer Wand der Durchgangsöffnung (11) vorgesehene Nut, das dazu vorgesehen ist, mit einem ersten Cliporgan zusammenzuwirken, oder
- einen in einer Wand der Durchgangsöffnung (11) definierten Innengewindeteil, der dazu vorgesehen ist, mit einem Außengewindeteil des Befestigungselements (8) des Verbindungsteils (5) zusammenzuwirken.

8. Einheit (1a, 1b, 1c, 1d) nach einem der vorangehenden Ansprüche, **dadurch gekennzeichnet, dass** der Teil (4) zur Aufnahme des abnehmbaren Trägers (2a, 2b, 2c, 2d) eine erste Komponente (7a), die mit einer Innenseite (9a) versehen ist, die die hervorstehende Fläche des Einheilelements (10) ganz oder teilweise bedecken kann, und eine zweite Komponente (7b), die von einer Außenseite (9b) der ersten Komponente (7a) vorsteht, umfasst.

9. Einheit (1e, 1f) nach einem der vorangehenden Ansprüche, **dadurch gekennzeichnet, dass** der Aufnahmeteil (4) des abnehmbaren Trägers (2e, 2f, 2g) eine erste Komponente (7a) umfasst, die eine zweite Komponente (7b) dieses Aufnahmeteils (4) mit dem Verbindungsteil (5) verbindet.

10. Einheit (1e, 1f) nach dem vorangehenden Anspruch, **dadurch gekennzeichnet, dass** die erste Komponente (7a) mit einem kegelstumpfförmigen Abschnitt versehen ist, der mit einer konischen Auflage des Einheilelements (10) zusammenwirkt, um eine Schnittstelle zwischen dem Einheilelement und dem abnehmbaren Träger (2e, 2f, 2g) abzudichten und um jegliches Translationsspiel zwischen dem Einheilelement und dem abnehmbaren Träger (2e, 2f, 2g) auf null zu reduzieren.

11. Einheit (1e, 1f) nach einem der Ansprüche 1 bis 10, und 13 und 14, **dadurch gekennzeichnet, dass** der Verbindungsteil (5) mit einem Drehsicherungselement (16) für einen guten Halt des abnehmbaren Trägers (2e, 2f, 2g) auf dem Einheilelement (10) versehen ist.

12. Einheit (1a, 1f) nach einem der vorangehenden Ansprüche, **dadurch gekennzeichnet, dass** der abnehmbare Träger (2a, 2f, 2g) ein Durchgangsloch (19) umfasst, das sich in Längsrichtung von einem Ende des abnehmbaren Trägers (2a, 2f, 2g) zum anderen erstreckt.

13. Einheit (1a, 1f) nach einem der vorangehenden Ansprüche, **dadurch gekennzeichnet, dass** sie ein Verriegelungselement (20a, 20b) umfasst, dessen erstes Ende einen Außengewindeteil umfasst, der dazu geeignet ist, mit dem Aufnahmeteil (4) des abnehmbaren Trägers (2a, 2f, 2g) zusammenzuwirken, insbesondere mit einer Wand eines Durchgangslochs (19), das an einer zweiten Komponente (7b) des Aufnahmeteils (4) definiert ist, die ganz oder teilweise mit einem Außengewinde versehen ist, und/oder dass sie ein Verriegelungselement (20a, 20b) umfasst, dessen zweites Ende dazu geeignet ist, mit dem Verbindungsteil (5) des abnehmbaren Trägers (2a, 2f, 2g) zusammenzuwirken, insbesondere mit einem ersten Cliporgan.

14. Einheit (1a, 1b, 1c, 1d, 1e, 1f) nach einem der vorangehenden Ansprüche, **dadurch gekennzeichnet, dass** der abnehmbare Träger (2a, 2b, 2c, 2d, 2e, 2f, 2g) aus einem polymeren Material gefertigt ist, insbesondere aus einem PEEK-, PMMA- oder auch POM-Material, und/oder dass der abnehmbare Träger ein einstückiges Teil (2a, 2b, 2e, 2f, 2g) ist und/oder dass das Einheilelement (10) ein einstückiges Teil ist.

15. Zahnrestaurationssystem, **dadurch gekennzeichnet, dass** es eine Zahnrestaurationseinheit nach einem der vorangehenden Ansprüche, ein Element zur digitalen Abdrucknahme, insbesondere einen Scanner, und mindestens einen Rechner umfasst, der die Bilder aus der digitalen Abdrucknahme auswertet, um auf der Grundlage der anatomischen Form der Einheilungseinheit und/oder durch Erkennung mindestens eines Markers automatisch den Typ des verwendeten Einheilelements zu erkennen, wobei das System die Restaurationseinheit in ihrer zweiten Konfiguration nutzt, in der allein die Einheilungseinheit im Mundraum digitalisiert ist.

## Claims

1. An assembly (1a, 1b, 1c, 1d, 1e, 1f) for dental restoration comprising a healing element (10) able to be connected to a dental implant (60), comprising a lateral surface (13) intended to be integrated within a gum for the purpose of shaping the gum as it heals, and an end surface (14) that forms, together with part of said lateral surface (13) an emergent surface, that is intended to remain outside the gum, and is asymmetrical with respect to at least one perpendicular median plane, and the healing element (10) comprising a through-opening (11) and a linking zone (6) defined in this through-opening, said assembly (1a, 1b, 1c, 1d, 1e, 1f) for dental restoration comprising a detachable prosthesis support (2a, 2b, 2c, 2d, 2e, 2f, 2g) comprising a receiving part (4) for a crown prosthesis (25, 25') and a linking part (5) capable of engaging with said matching linking zone (6) that is defined in said through-opening (11) that is provided in said healing element (10), said linking zone (6) being able to receive the detachable fixation of the detachable prosthesis support (2a, 2b, 2c, 2d, 2e, 2f, 2g) in a first configuration of the assembly for dental restoration, and said assembly (1a, 1b, 1c, 1d, 1e, 1f) for dental restoration comprising a screw (40) with a head (41), which is embedded in the healing element and does not exceed the end face (14) of the healing element (10) in a second configuration in which the healing element is fixed by itself to an implant using said screw (40), without a detachable prosthesis support (2a, 2b, 2c, 2d, 2e, 2f, 2g), so that the end surface (14) and/or the emergent surface of the healing element (10), supplemented by the head (41) of the screw (40) in this second configuration shapes a closed surface having a continuous surface, without raised portions.

2. The assembly (1a, 1b, 1c, 1d, 1e, 1f) as claimed in the preceding claim, **characterized in that** parts of the emergent surface of the healing element (10) that are respectively intended to be positioned oriented toward the inside and toward the outside of the mouth have a different shape.

3. The assembly (1a, 1b, 1c, 1d, 1e, 1f) as claimed in any one of the preceding claims, **characterized in that** a transverse section of the lateral surface (13) of the healing element (10) or a projection on a parallel plane of the emergent surface of the healing element (10) have:
- a substantially trapezoidal shape or a substantially polygonal or triangular or square or rectangular or ovoid shape, or a substantially polygonal shape with rounded corners; and/or
- a part intended to be positioned oriented toward the outside of the mouth that is bigger than a part intended to be positioned oriented toward the inside.

4. The assembly (1a, 1b, 1c, 1d, 1e, 1f) as claimed in one of the preceding claims, **characterized in that** the end surface (14) and/or the emergent surface of the healing element (10) have:
- a non-flat, curved surface; and/or
- a convex surface.

5. The assembly (1a, 1b, 1c, 1d, 1e, 1f) as claimed in any one of the preceding claims, **characterized in that** the emergent surface of the healing element has an identifiable three-dimensional shape, automatically enabling its recognition, its positioning, and/or its orientation and indirectly the positioning and the orientation of the implant, without a marker.

6. The assembly (1a, 1b, 1c, 1d, 1e, 1f) as claimed in any one of the preceding claims, **characterized in that** the linking part (5) of the detachable support comprises, at a free end, a fixing element (8), such as a first clipping component or a threaded part, that is capable of engaging with said linking zone (6) of the healing element (10) in order to establish a mechanical link.

7. The assembly (1a, 1b, 1c, 1d, 1e, 1f) as claimed in any one of the preceding claims, **characterized in that** the linking zone (6) of the healing element (10) comprises:
- a second clipping component, in particular a recess, defined in a wall of the through-opening (11), which recess is designed to engage with a first clipping component; or
- a tapped part defined in a wall of the through-opening (11) that is designed to engage with a threaded part of the fixing element (8) of the linking part (5).

8. The assembly (1a, 1b, 1c, 1d) as claimed in any one of the preceding claims, **characterized in that** the receiving part (4) of the detachable support (2a, 2b, 2c, 2d) comprises a first component (7a) provided with an internal face (9a) capable of covering all or part of the emergent surface of the healing element (10) and a second component (7b) projecting from an external face (9b) of the first component (7a).

9. The assembly (1e, 1f) as claimed in any one of claims of the preceding claims, **characterized in that** the receiving part (4) of the detachable support (2e, 2f, 2g) comprises a first component (7a) connecting a second component (7b) of this receiving part (4) with the linking part (5).

10. The assembly (1e, 1f) as claimed in the preceding claim, **characterized in that** the first component (7a) is provided with a frustoconical portion engaging with a conical bearing surface of the healing element (10) in order to seal an interface between the healing element and the detachable support (2e, 2f, 2g) and to reduce any translational play between the healing element and the detachable support (2e, 2f, 2g) to zero.

11. The assembly (1e, 1f) as claimed in any one of the preceding claims, **characterized in that** the linking part (5) is provided with an anti-rotation element (16) to properly hold the detachable support (2e, 2f, 2g) on the healing element (10).

12. The assembly (1a, 1f) as claimed in any one of the preceding claims, **characterized in that** the detachable support (2a, 2f, 2g) comprises a through-hole (19) extending longitudinally from one end to the other of the detachable support (2a, 2f, 2g).

13. The assembly (1a, 1f) as claimed in any one of the preceding claims, **characterized in that** it comprises a locking element (20a, 20b), a first end of which comprises a threaded part that is able to engage with the receiving part (4) of the detachable support (2a, 2f, 2g), in particular with a wall of a through-hole (19) defined on a second component (7b) of the receiving part (4) that is fully or partly tapped, and/or
**in that** it comprises a locking element (20a, 20b), a second end of which is able to engage with the linking part (5) of the detachable support (2a, 2f, 2g), in particular with a first clipping component.

14. The assembly (1a, 1b, 1c, 1d, 1e, 1f) as claimed in any one of the preceding claims, **characterized in that** the detachable support (2a, 2b, 2c, 2d, 2e, 2f, 2g) is produced from a polymer material, in particular from a "PEEK", "PMMA" or even "POM" material, and/or **in that** the detachable support is a one-piece part (2a, 2b, 2e, 2f, 2g) and/or **in that** the healing element (10) is a one-piece part.

15. A system for dental restoration, **characterized in that** it comprises an assembly for dental restoration as claimed in one of the preceding claims, an element for taking a digital impression, in particular a scanner, and at least one computer that uses the images originating from taking a digital impression for automatic recognition, on the basis of the anatomical shape of the healing assembly and/or by recognizing at least one marker, of the type of healing element that is used, said system using the restoration assembly in its second configuration, in which only the healing assembly is digitized in the oral space.
